# EUROPEAN PATENT SPECIFICATION

(11) **EP 1 015 362 B1**
(45) Date of publication and mention of the grant of the patent: **28.08.2002**
(21) Application number: 98919973.2
(22) Date of filing: 29.04.1998
(51) Int. Cl.: B65G 47/53, B65G 47/54, B65G 47/82, B65G 47/84

(54) **EJECTION MECHANISM FOR CONVEYOR**
AUSWURFMECHANISMUS FÜR FÖRDERER
MECANISME D'EJECTION POUR TRANSPORTEUSE

(30) Priority: 29.04.1997 US 841201
(43) Date of publication of application: 05.07.2000
(73) Proprietor: UNITED PARCEL SERVICE OF AMERICA, INC., Atlanta, GA 30328 (US)
(72) Inventor: BONNET, Henri, Atlanta, GA 30328 (US)
(74) Representative: Chettle, Adrian John
(86) International application number: PCT/US98/08597
(87) International publication number: WO 98/049080

(56) References cited:
- EP-A- 0 287 171
- DE-A- 2 547 899
- DE-A- 2 818 425
- FR-A- 2 164 831
- FR-A- 2 255 235
- FR-A- 2 407 149
- US-A- 3 642 113
- US-A- 3 782 527
- US-A- 4 143 755
- US-A- 4 509 636
- US-A- 4 696 386

## Description

### Technical Field

This invention relates to automated sorting of items such as parcels to a variety of output destinations, and more particularly relates to conveyor systems which have the capability to rapidly and reliably discharge parcels (which can also be referenced as packages) or other items thereon to either side of a conveying path, such that the packages or other items may be transported elsewhere.

### Background of the Invention

In modern high volume package delivery systems, package delivery services utilize a variety of material handling systems. Such material handling systems often include package conveying systems that divert packages to a variety of output destinations such as chutes, bins, and conveyor systems.

One of the most conventional types of conveyors is a belt conveyor, which includes the use of an endless flexible belt which passes over at least two cylindrical rollers, one of which is a drive roller. Packages are placed atop the upwardly-directed "working" surface of the belt conveyor, and are transported in a generally straight direction from end of the conveyor to the other. Another type of conveyor is a "roller" conveyor which con include powered or idling rollers which contact, support, and in certain instances propel the bottom of the package along its path.

Systems for diverting objects from a moving conveyor have been available for many years. Such systems are useful in discharging objects from a conveying surface at selected stations located along the path of the conveying surface.

Some package diverting systems utilize a pusher element or member mounted on or beneath a conveying surface which when actuated ejects a package laterally across the conveying surface to a desired discharge station. Many such systems guide a pusher element laterally across the conveying surface using a complex series of guide tracks, or elements mounted beneath the conveying surface. Other systems utilize a means for elevating and tilting a package above and away from the upper surface of a conveying surface so that the package may be withdrawn to an awaiting chute or discharge station. Still other systems have been known to collapse the conveying surface such that the package falls to a subjacent conveying surface on which the package is translated to a desired discharge location.

U.S. Patent No. **1,462,511** discloses another conveyor diverter. A side conveyor extends perpendicular from a main conveyor. A set of diverting rollers are configured perpendicular to the main conveyor and are raised above the upper surface of the main conveyor to cause an object to be diverted from the surface of the main conveyor under force of gravity across the set of diverting rollers.

United States Patent No. **1,549,499** discloses an elevating means for use in connection with roller bed sorting tables for raising a box or parcel a slight distance above the plane of the roller bed to allow the box or parcel to be withdrawn to an awaiting chute or discharge station. A box or parcel to be discharged is brought to a state of rest at a sorting station immediately above an elevating roller. The elevating roller is raised by depressing a foot lever. The box or parcel positioned over the elevating roller is raised off the roller bed which allows an operator to pull the box or parcel off the roller bed on to an adjacent chute or discharge station.

A box or parcel switching unit for discharging a box sideways on to an adjacent storage conveyor or chute is disclosed in U.S. Patent No. **2,062,604.** A box or parcel is brought to a stopped position on a receiving conveyor and overlying a discharge conveyor. The receiving conveyor is dropped from beneath the box or parcel allowing it to come to rest on the discharge conveyor. The box or parcel is then translated off the surface of the discharge conveyor to an awaiting adjacent conveyor or chute.

U.S. Patent No. **3,138,238** discloses a conveyor system with a powered diverter for diverting an object from the surface of a main conveyor to an awaiting side conveyor. The powered diverter includes an assembly of diverting wheels that are oriented toward the side conveyor. The group of diverting wheels are normally positioned below the upper surface of the main conveyor so that objects traveling on the main conveyor do not contact the diverting wheels. In order to divert an object from the main conveyor to the side conveyor, the diverting wheels are elevated so that they are slightly above the upper surface of the main conveyor. Accordingly, an object traveling down the main conveyor is diverted by contact with the elevated diverting rollers.

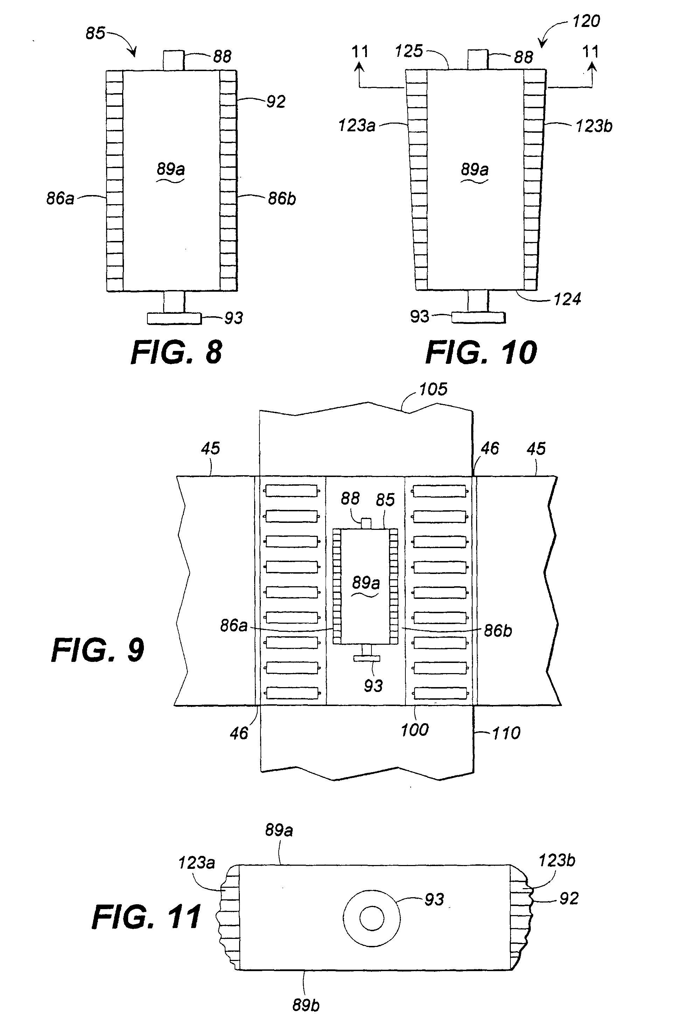

U.S. Patent No. **3,291,279** to *DeGood* likewise discloses a conveyor system with a powered diverter, which as shown in Fig. 8 works in conjunction with a shifting linkage 200. Chains of powered roller elements are used, which are indexed upwardly to engage packages to eject them at an angle from the original conveying path.

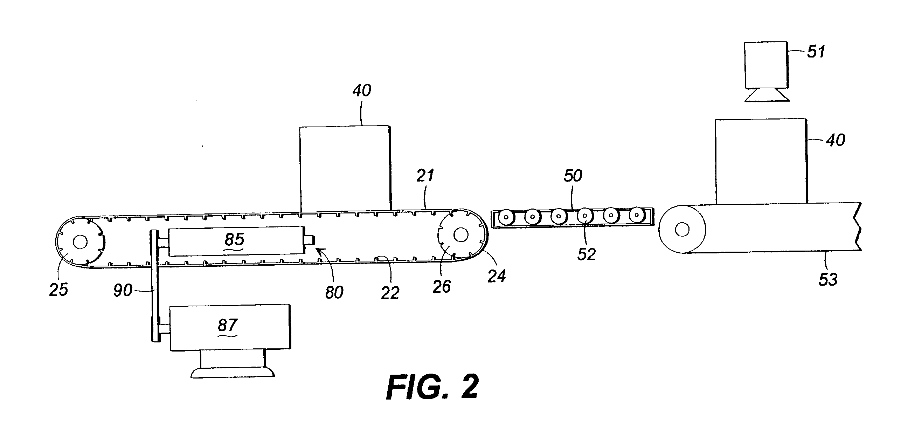

U.S. Patent No. **3,303,923** to *Davis* discloses a conveyor diverter mechanism which includes a number of relatively thin conveying belts 25, 26, and 27 which are indexed upwardly as shown in Fig. 2 to engage and withdraw a selected package.

U.S. Patent No. **4,598,815** to *Adama* discloses a powered roller diverter which includes a single row of powered diverter rollers which can be selectively indexed upwardly to engage and eject a package on a belt conveyor path. The single row of diverter rollers is selectively indexed upwardly from within a transverse gap between the downstream roller of an upstream conveyor to the upstream roller of a downstream conveyor, such that the rollers engage and discharge a package sidewardly.

U.S. Patent No. **4,730,718** to *Fazio* discloses a 'bidirectional mechanism" which, as shown well in Fig. 1, shows a plurality of elastomeric belts 76 mounted upon an indexable table assembly associated with a conveyor assembly. The belts are supported by indexable rollers such that portions of the belts can be indexed upwardly within elongate slots defined between elongate conveyor rollers being part of the conveyor assembly, to cause the belt portions to engage packages otherwise atop the conveyor rollers, and to eject them to either side of the conveyor path. The *Kloosterhouse* patent (U.S. Patent No. **4,962,841**), owned by the same assignee, likewise discloses such a configuration.

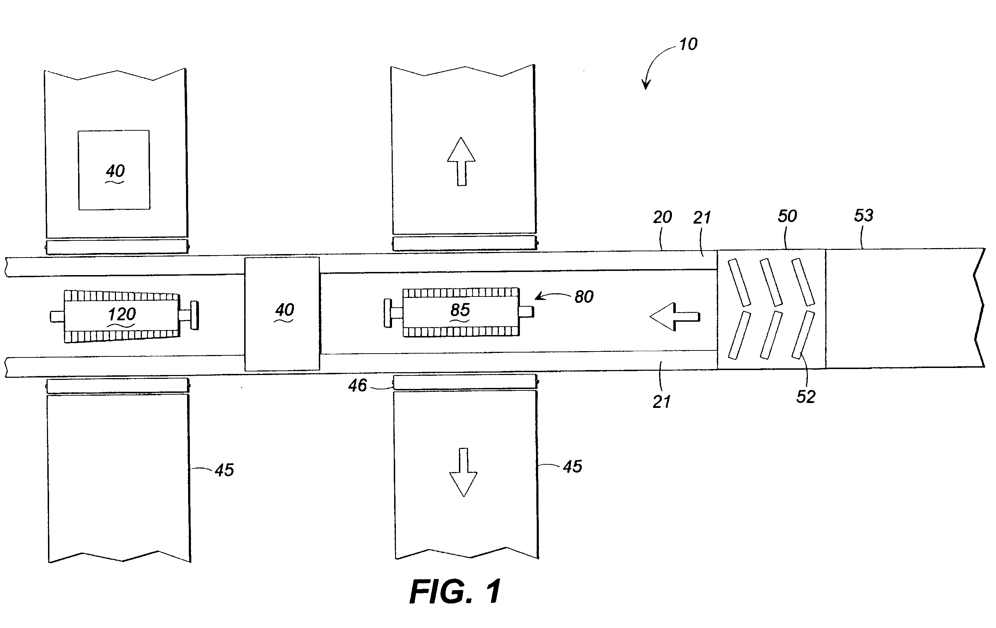

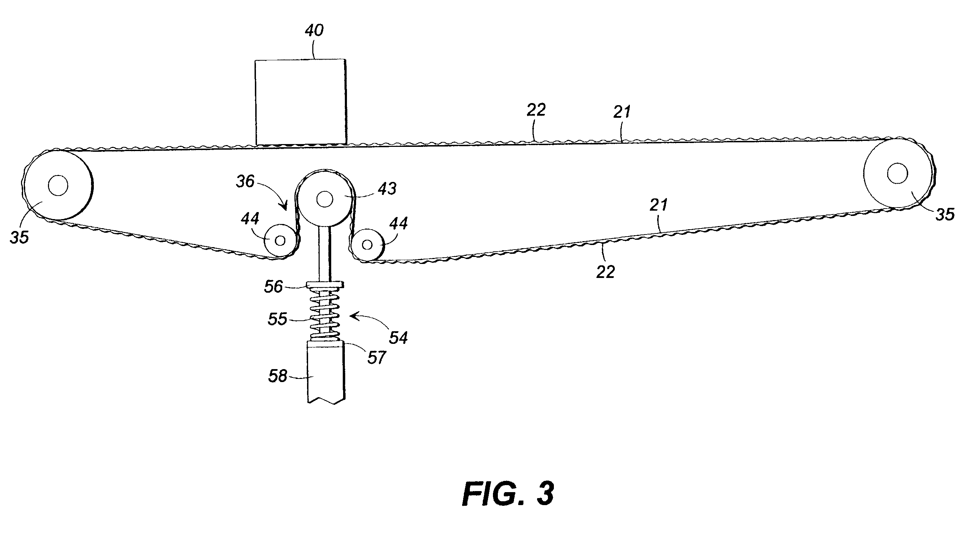

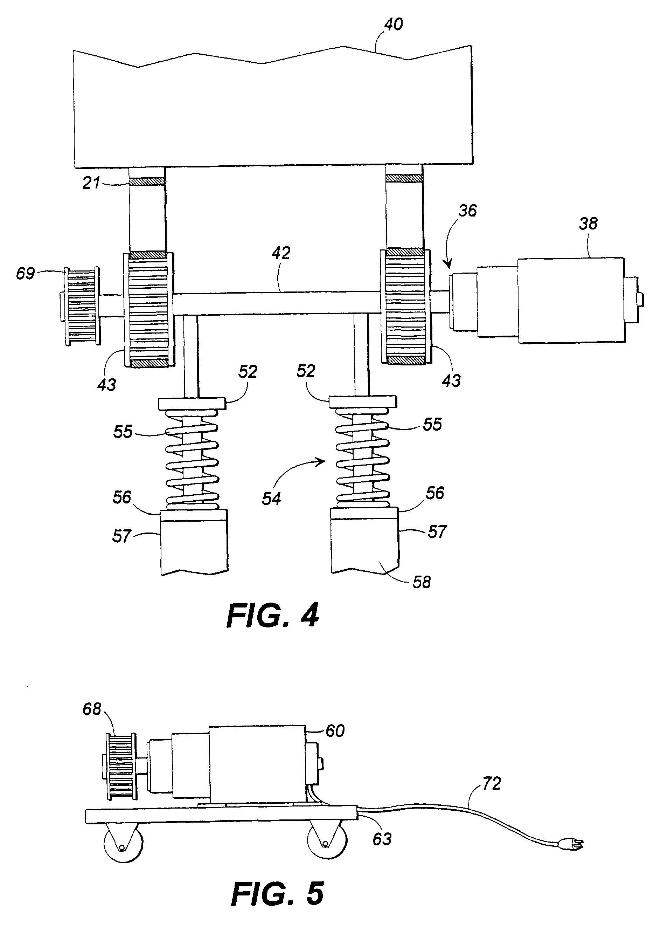

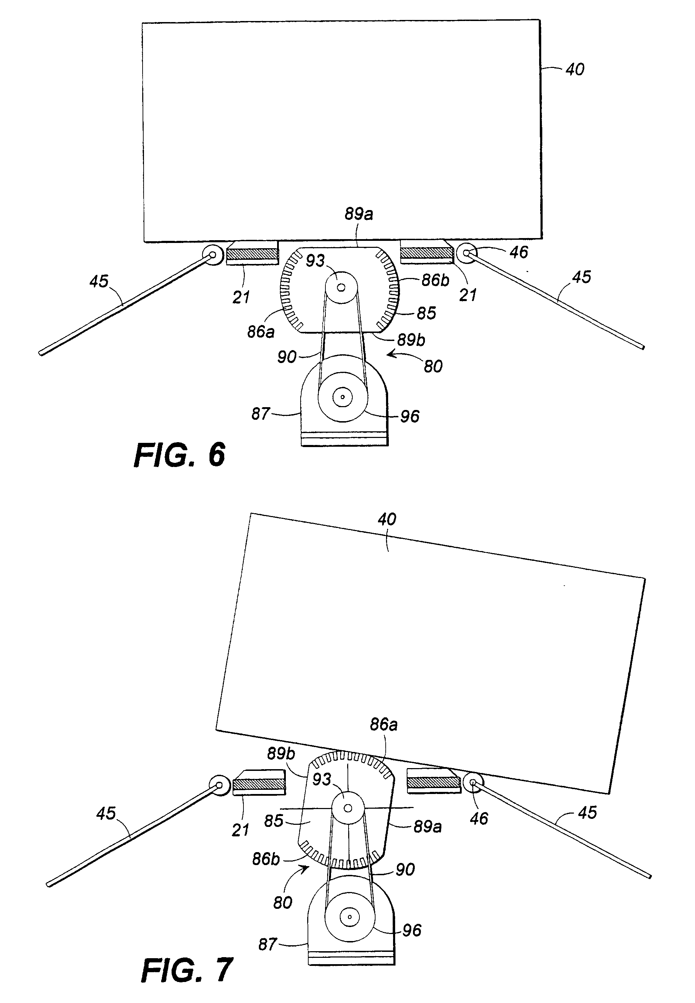

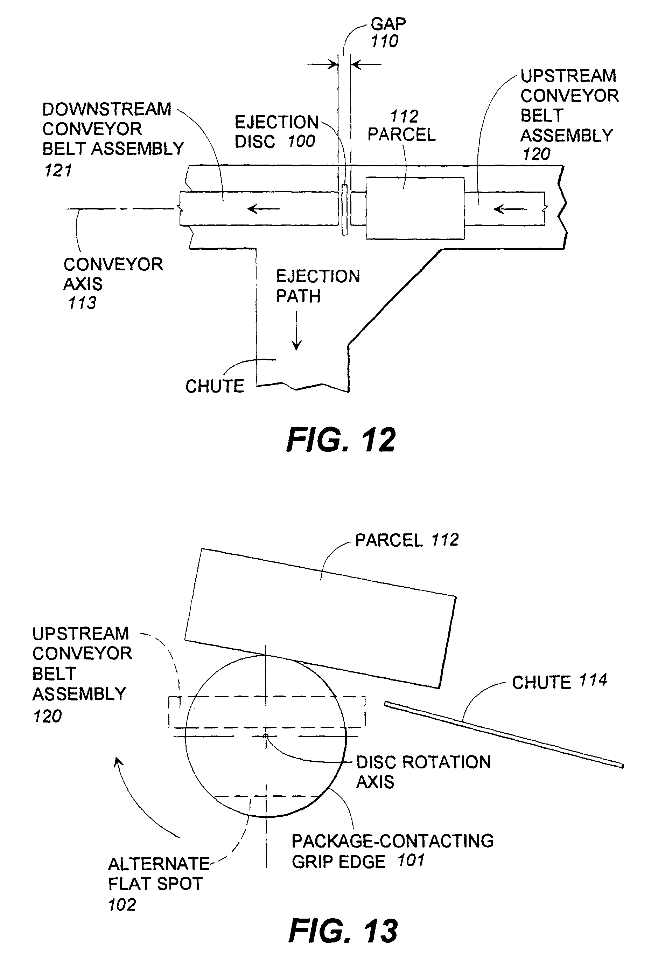

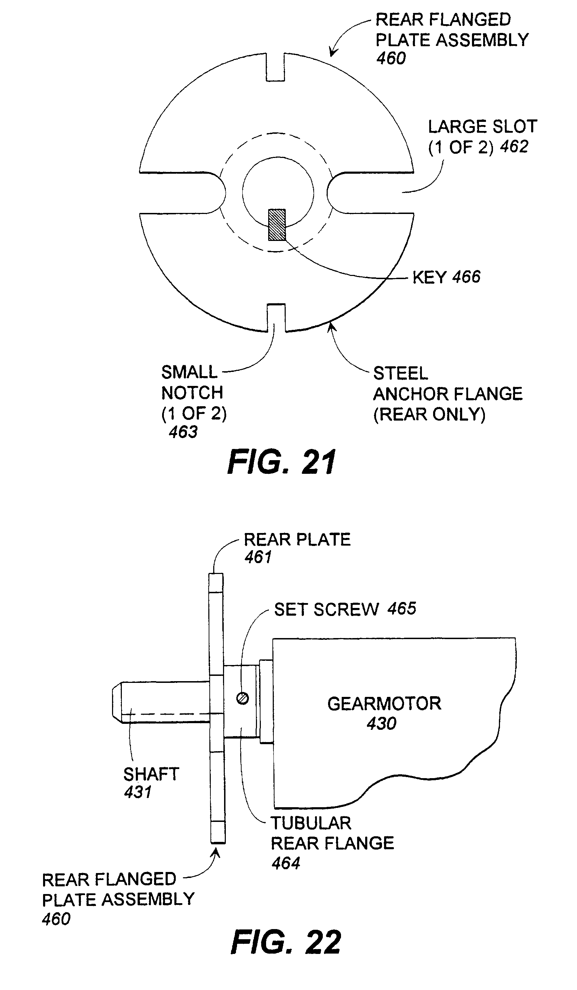

U.S. Patent No. **4,979,606** to *Usui* discloses a transporting direction controlling device applicable to conveyor systems. As shown in Figs. 1-5 of the *Usui* patent, the device utilizes a rotor member comprised substantially of a cylindrical or disk-shaped roller which is tiltable in variable directions for tilting the plane of the upper surface of the rotor member. By tilting the direction of the plane and the rotating direction of the rotor member, the transporting direction of a box or package may be changed. As shown in Figs 3(A) - 3(D) of *Usui,* force is exerted on an object by tilting the plane of the rotating device so that the object will be moved in the direction tangent to the direction of travel of the upper most portion of the tilted rotating device. In practice, Usui describes using the rotating device in concert with a plurality of similar rotating devices to form a direction changing station, as shown in Figs. 5 and 12. As shown in Figs. 6 and 21, guide plates **116, 118,** and **312** are used to define a direction change path for the object.

U.S. Patent No. **5,165,516** to *Reed* discloses a three-way transfer conveyor which includes transfer belts which are selectively driven to the left and to the right at right angles to the conveyor rollers. As in the *Fazio* and *Kloosterhouse* references, the rubber belts fit into elongate transverse "gaps" between the conveyor rollers.

US-A-3782527 to Petershack and FR-A-2255235 to Izdatelstvo disclose a symmetric disk-like element rotatable over a fixed axis between elements of a support surface to transfer objects from said support surface.

EP-A-0287171 to Rapistan discloses the use of an elongate ejection member mounted on a pivoting axis, in a mechanism comprising spaced apart conveyors, the ejection member being usable to transfer objects from said conveyors.

In some of those systems, diverter mechanisms are utilized to divert an object from the upper surface of a conveying surface by bringing the object to a complete stop overlying the diverter mechanism and then either raising the diverter mechanism or lowering the object so that the diverter mechanism comes into contact with the object. Bringing the object to a complete stop prior to being diverted causes a significant reduction in the efficiency and speed of operation of the conveyor system. Some of those systems move a diverter into the path of a moving object. Problems associated with those systems include the inability to eject objects laterally from the surface of a moving conveying system at ejection speeds which are independent of the speed of the moving conveyor system.

Other limitations in the prior art include an inability to eject objects laterally at a high speed without encountering rotation of the package or object as it is discharged from the surface of the moving conveyor. Furthermore, such systems may be noisy and relatively difficult to repair when diverter systems components fail.

Finally, some prior art systems are complex in construction and require substantial disassembly in order to replace the discharge elements should they wear out.

Thus, there is a need in the art for a sorting conveyor system that can discharge or eject an object from a conveying surface without bringing the object to a stop and without changing the position or speed of the conveying surface. There is also a need in the art for a sorting conveyor system that can discharge or eject an object from a conveying surface at high speeds and without undesired rotation of the object during discharge. There is further a need in the art for a sorting conveyor system that is quiet during operation and which is easily repaired. Finally, there is a need in the art for a conveying device which allow for quick changes of replacement parts in order to reduce downtime.

### Summary of the Invention

The present invention seeks to provide an improved system for efficiently discharging items of various sizes and weights from a moving conveying surface. The present invention allows an object to be discharged laterally from the surface of a moving conveyor independent of the speed of the moving conveyor. An object may be discharged without raising an object diverter or ejection mechanism into the path of the moving object and without lowering the conveying surface to allow a moving object to contact a subjacent object diverter or ejection mechanism. The present invention is simple in construction and may be easily maintained by the quick removal and substitution of failed components.

Generally described, the present invention comprises a mechanism including an ejection member for ejecting an object from a support surface, the improvement comprising:
the ejection member being elongate and mounted for rotation about a fixed longitudinal axis subjacent to said support surface characterised in that, said ejection member has elongate first and second opposing sides, said support surface defines an opening for receiving one of said elongate first and second opposing sides; and
means for rotating said ejection member about said axis such that said one of said elongate first and second opposing sides rotates through said opening and above a plane defined by said support surface to eject said object from said support surface.

The present invention further provides a method of ejecting an object from a support surface by use of rotating ejection member, the improvement to said method comprising the steps of:
providing the ejection member with an elongate first side;
rotating the ejection member about a fixed longitudinal axis beneath said support surface;
rotating the first elongate side of said ejection member through an opening defined in said support surface;
contacting said object with said first elongate side of said ejection member; and
discharging said object from said support surface.

Therefore, it is an aspect of the present invention to provide an improved automated conveyor sorting system.

It is a further aspect of the present invention to provide an improved ejection mechanism for ejecting items from a conveying surface.

It is a further aspect of the present invention to provide a conveyor which is simple in construction.

It is a further aspect of the present invention to provide a conveyor which is reliable in construction.

It is a further aspect of the present invention to provide a conveyor which is simple in operation.

It is a further aspect of the present invention to provide a conveyor which is cost-effective to manufacture, operate, and maintain.

It is a further aspect of the present invention to provide an improved conveyor which may be easily dismantled for repair and maintenance.

It is a further aspect of the present invention to provide an improved apparatus for conveying and sorting items that can be repaired by quickly removing failed sub-assemblies.

It is a further aspect of the present invention to provide a conveyor which operates at reduced noise levels.

Other aspects, features, and advantages of the present invention will become apparent upon reading the following detailed description of the preferred embodiment of the invention when taken in conjunction with the drawing and the appended claims.

### Brief Description of the Drawings

Fig. 1 is a top plan view of an automated sorting system embodying the present invention.
Fig. 2 is a side diagrammatic view of the automated sorting system of Fig. 1.
Fig. 3 is a side diagrammatic view of a cog belt conveyor system showing a self-tensioning gear motor drive system.
Fig. 4 is an end view of part of the gear motor drive system of Fig. 3.
Fig. 5 is a side elevation view of a portable gear motor mounted on a wheeled table.
Fig. 6 is an end view of a discharge drum ejection mechanism of the present invention.
Fig. 7 is an end view of the discharge drum ejection mechanism of Fig. 6, showing a parcel being discharged to a discharge chute.
Fig. 8 is a top plan view of a discharge drum of the present invention.
Fig. 9 is a top plan view of a roller bed sorting system embodying the present invention.
Fig. 10 is a top plan view of a tapered discharge drum of the present invention.
Fig. 11 is a transaxial cross-sectional view of the tapered discharge drum of Fig. 10.
Fig. 12 is a top plan view of a portion of a conveyor system, illustrating an ejection disc **100** located between upstream and downstream conveyor belt assemblies **120, 121,** respectively. A parcel **12** (also known as a package **12**) is shown approaching the ejection disc **100.** If the ejection disc **100** ejects the parcel **112,** the parcel will be urged into the area of a side chute **114.** If the ejection disc **100** does not eject the parcel **112,** the parcel will be passed from upper conveyor belt assembly **120** to lower conveyor belt assembly **121.**
Fig. 13 is an "upstream" illustrative sectional view of the configuration of Fig. 12, looking along the conveying axis, showing an ejection disc **100** ejecting a package to the viewer's right. The ejection disc **100** is shown in round solid line outline, although as shown by the dotted line a flat spot **102** is included which exists if a truncated section is provided as discussed later.

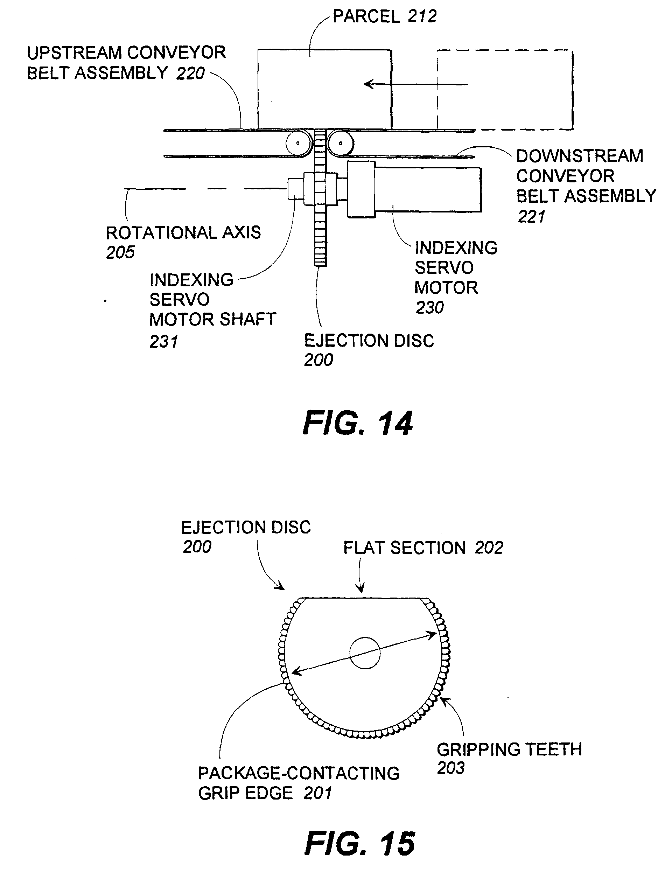

Fig. 14 is a side elevational view of a portion of a conveying configuration wherein a package **212** is moved from conveyor belt assembly **220** to a downstream conveyor belt assembly **221.** As may be seen, the two conveyor belts include substantially planar upper conveying surfaces, which lie substantially along the same horizontal plane. A first ejection disc **200** is positioned intermediate the two belts, and is configured such that its selective rotation causes a portion of the disc to be moved upwardly into the path of the package (preferably from below the package), such that the package is discharged sidewardly relative to the two conveying belts.
Fig. 15 shows an isolated view of the 12" diamater ejection disc **200** as viewed from its downstream side and a flat section **202.** As may be seen, when the ejection disc **100** is in its normal position, the flat section allows passage of the package. However, when the ejection disc **200** is rotated, the curved peripheral edge **201** of the ejection disc **100** rises above the conveying surface, causing interference with a package moving along its conveyor path and preferably discharging the package.
Figs. 16 and 17 are views similar to Figs. 14 and 15, respectively illustrate what happens when the ejection disc is rotated 180 degrees about its rotational axis from that shown in Figs. 14 and 15. As may be seen, when the ejection disc **200** is actuated through such rotation, its curved edge (having a grip surface) rises above the conveyor surface, causing the package to be lifted. As the ejection disc **200** is likewise rotating, this engagement causes the package to encounter a force substantially 90 degrees in relation to the conveying axis of the package.
Fig. 18 is a side elevational view of a second disc, illustrating a parcel **312** being passed from an upstream conveyor belt assembly **320** towards a lower conveyor belt assembly **321.** An ejection disc **300** is shown contacting the underside of the package **312,** being indexed upwardly by use of an actuator **340,** which actuates a pivoting support member **333,** which supports a motor **330,** which rotatably drives a shaft **331,** which is substantially rigidly attached to the ejection disc **300.**
Fig. 19 is a view similar to that to Fig. 18, except no package is shown, and the ejecting disc **300** is in its "neutral" or "withdrawn" position.
Fig. 20 is a side elevational view illustrating a first multi-segmented, round ejection disc **400** in position between upstream and downstream conveyor belt assemblies **420, 421,** respectively. The ejection disc is mounted to a shaft which is rotatably driven by a gear motor **430.** The gear motor is mounted to a frame member which is pivotably mounted about an axis P, and actuated about that axis by an actuator **440.** The actuator has essentially two positions, the "ejecting position", and a "retracted" position which is known in Fig. 20.
Fig. 21 is a front end view of a rear flanged plate assembly **460** used in the Fig. 20 configuration.
Fig. 22 is a side elevational of a motor **430** having a shaft **431** having a rear flanged plate assembly **460** mounted thereon.
Fig. 23 is a pictorial view of a half wheel segment **402** of the Fig. 20 configuration, configured mostly of molded urethane in one embodiment. This half wheel segment **402** includes an embedded metal rectangular rod **404.**
Fig. 24 is a pictorial view of a front steel plate of approximately 1/8 inch in thickness. This front plate includes a two large slots **452,** and two opposing small notches **453.**
Fig. 25 is a right side elevational view of the first multi-segmented disc configuration, with two half wheel segments **402** installed thereon. No front plate or associated hardware is yet in place.
Fig. 26 is a rear elevational view of that shown in Fig. 25, with the motor not shown.
Fig. 27 is a front end view of the first multi-segmented disc **400** showing the spring **470** and a pipe spacer in place.
Fig. 28 is a right side elevational view of that shown in Fig. 27.
Fig. 29 is a front end illustrative view of a second multi-segmented wheel shown in round configuration.
Fig. 30 is a pictorial view of that shown in Fig. 29, except no tension spring is shown.
Fig. 31 is a side illustrative view of a portion of the main disc portion **502** of the Fig. 30 configuration, showing a steel pin such as **510** in detail.
Fig. 32 is a top plan view of the second multi-segmented wheel illustrating the beveled interconnection between the insert portion **503** and a main disc portion **504.** Also shown is the capturing provided by the front plate **550** and the rear flange plate assembly **560.** Finally shown is a pipe ring **513** which can be placed on the front side of the front plate.
Fig. 33 is a front view of a front plate **550,** showing a pair of holes and a key tab.
Fig. 34 is a side elevational view of the second multi-segmented disc configuration showing the main wheel portion **502** and the smaller insert portion **503** in place with a spring and pipe washer likewise in place.
Fig. 35 is a rear isolated plan view of a rear flanged plate assembly **560** which includes a rear plate **561,** and a rear flange **564.**
Figs. 36 and 37 illustrate top plan and side elevational views, respectively of third multi-segmented ejection disc **600.**

The multi-segmented disc includes a "flat spot", although as shown elsewhere in this application such a multi-segment disc could not have a flat section.

### Detailed Description of the Preferred Embodiment

Referring now in more detail to the drawings, in which like numerals refer to like parts throughout the several drawings, Fig. 1 shows a top plan view of an automated sorting system embodying the present invention. With reference to Figs. 1, 2 and 3, the sorting system **10** preferably includes a cog belt conveyor system **20** comprised of a pair of continuous cog belt conveyors **21** positioned in parallel spaced-apart relation. In a preferred form shown, the cog belt conveyor system **20** forms a closed loop. As shown in Figs. 1 and 2, the cog belt conveyor system **20** may include a plurality of ejection mechanisms **80** for discharging items, such as parcels **40,** from the surface of the parallel cog belt conveyors **21** onto a variety of output destinations such as receiving chutes **45,** a parallel conveyor (not shown), or a non-parallel conveyor (not shown).

The parcels **40** may be loaded onto the cog belt conveyor system **20** manually or by a feed conveyor **53.** A conventional centering roller bed **50** may be used to properly orient the parcels **40** onto the conveying surfaces of the cog belt conveyors **21,** as shown in Fig. 1. Other sub-assemblies of the sorting system **10** include a self-tensioning gear motor drive system **36** for providing proper tension in the cog belt conveyors **21** of the cog belt conveyor system **20,** as shown in Fig. 6. The assemblies and sub-assemblies thus far noted and shown will now be described in detail.

Referring still to Figs. 1 and 2, the cog belt conveyor system **20** is comprised of a pair of cog belt conveyors **21** configured in spaced-apart relation for transporting an object such as parcel **40** on the upper surface of the cog belt conveyors **21.** In the preferred form shown, the cog belt conveyors **21** include a smooth outer conveying surface. Cog teeth **22** are disposed along the inner surface of the cog belt conveyors **21** for engaging a cog belt drive mechanism **24.** The drive mechanism **24** preferably includes a drive sprocket 26 configured for engagement with the cog teeth **22** disposed along the inner surface of the cog belt conveyors **21,** as shown in Fig. 2. An electric motor (not shown) is preferably functionally attached to the drive sprocket **26.** As shown in Fig. 2, the cog belt conveyors **21** are supported at the end opposite the cog belt drive means **24** by an idle sprocket **25.**

A feed conveyor **53** is provided for automatically loading objects, such as parcel **40,** onto the cog belt conveyor system **20.** A centering roller bed **50** is interposed between the feed conveyor **53** and the cog belt conveyor system 20. The centering roller bed **50** is comprised of a plurality of rollers **52** configured in a herringbone configuration. Preferably, the roller bed **50** serves to center and properly orient an object such as a parcel **40** onto the parallel cog belt conveyors **21,** as shown in Fig. 1. As shown in Fig. 1, a plurality of discharge chutes 45 are provided adjacent to the cog belt conveyors **21** for receiving parcels **40** discharged from the surface of the cog belt conveyors **21,** as will be discussed and detailed below. It should be understood, that a variety of discharge destinations may be utilized, such as bins and separate conveyors (not shown).

An alternate configuration for the cog belt conveyor system **20** is shown in Fig. 3. In the alternate configuration for the cog belt conveyor system **20,** the cog belt conveyors **21** are supported by a pair of idler rollers **35.** As shown in Fig. 3, the cog belt conveyors **21** of this embodiment are disposed about the idler rollers **35** such that the outer conveying surface of the cog belt conveyors **21** include cog teeth for engagement with a self-tensioning gear motor drive system **36.** The inner surface of the cog belt conveyors **21** are smooth for engagement with the idler rollers **35.**

The self-tensioning gear motor drive system **36** includes a reversible gear motor **38.** As shown in Fig. 4, the reversible gear motor **38** is attached to a drive shaft **42** on which is disposed a pair of drive sprockets **43** for engaging and driving the pair of parallel cog belt conveyors **21.** As shown in Fig. 3, a pair of snub rollers **44** are utilized to keep the cog belt conveyors **21** in continuous engagement with the drive sprockets **43.**

A tensioning mechanism **54** is provided for maintaining proper tension in the cog belt conveyors **21** of this embodiment of the present invention. As shown in Fig. 4, the tensioning mechanism **54** is comprised of a tension spring **55** which is retained by a spring retaining member **52.** At the lower end of the tension spring **55** is a spring compression and release member **56.** The spring compression and release member **56** is actuated by hydraulic cylinder **57** which contains hydraulic fluid **58.** As is well known to those skilled in the art, a suitable pneumatic cylinder may be used in place of the hydraulic cylinder **57.** Tension in the cog belt conveyors **21** may be increased by manually actuating the hydraulic cylinder **57,** or operation of the tensioning mechanism **54** may be directed by a programmable logic controller (not shown). It should be understood, that a variety of tension spring mechanisms may be used in place of the tensioning mechanism **54** for manually or automatically maintaining constant tension in the cog belt conveyors **21.**

Referring now to Figs. 4 and 5, a portable gear motor **60** is provided for powering the sprockets **40** and cog belt conveyors **21** in the event of a failure of the reversible gear motor **38.** As show in Fig. 4, the portable gear motor **60** is mounted on a wheeled table **63** to allow the portable gear motor **60** to be moved into any desired position. As shown in Fig. 4, an emergency drive sprocket **68** is disposed on the end of the drive shaft **42** opposite the reversible gear motor **38.** As shown in Figs. 4 and 5, the portable gear motor **60** includes a drive sprocket **69** for engagement with the emergency drive sprocket **68.** A power cord **72** is included for providing power to the portable gear motor **60.**

Referring now to Figs. 1, 2, 6 and 7, the sorting system **10** includes a plurality of ejection mechanisms **80** for ejecting an object, such as a parcel **40,** laterally from the upper surface of the cog belt conveyors **21** to an adjacently disposed discharge destination, such as a chute **45,** or other desired discharge destination, such as a bin, or alternate conveyor. The ejection mechanism **80,** shown in Figs. 1 and 6, is disposed medially of the parallel cog belt conveyors **21.** The ejection mechanism **80** is mounted subjacent to the upper surface of the cog belt conveyors **21.**

The ejection mechanism **80** includes a discharge drum **85** and a discharge drum drive motor **87,** as shown in Figs. 6, 7 and 8. As shown in Figs. 6 and 8, the discharge drum **85** is an elongate member defining a generally rectangular transaxial cross-section and having upper and lower surfaces **89a** and **89b.** The discharge drum **85** has first and second opposing sides **86a** and **86b.** which are disposed adjacent to the upper and lower surfaces **89a** and **89b.** The first and second opposing sides **86a** and **86b** are generally convex shaped and are separated by the longer cross-sectional diameter of the discharge drum **85.**

As shown in Figs. 6, 7 and 8, a plurality of flexible ridges **92** are disposed along the surfaces of the convex opposing sides **86a** and **86b** of the discharge drum **85.** The flexible ridges **92** may be made from any suitable polymer material such as polyurethane. As will be discussed below, the flexible ridges **92** assist in ejecting an overlying object, such as the parcel **40** from the conveying surface of the cog belt conveyors **21.**

A discharge drum drive shaft **88** is configured through the central longitudinal axis of the discharge drum **85.** A discharge drum drive sheave **93** is attached to one end of the discharge drum drive shaft **88,** as shown in Fig. 8. As shown in Fig. 6, a reversible discharge drum drive motor **87** includes a drive motor sheave **96** for driving a drive belt **90** to impart rotation to the discharge drum **85.** As shown in Figs. 1, 6 and 7, the axis of rotation of the discharge drum **85** is defined by the discharge drum shaft **88.** The axis of rotation of the discharge drum **85** lies along the axial center of the path of travel of the cog belt conveyors **21.** As shown in Figs. 6 and 7, the axis of rotation of the discharge drum **85** remains fixed beneath the conveying surfaces of the cog belt conveyors **21.**

In operation, the ejection mechanism **80** is used to discharge an object such as the parcel **40** from the upper surface of the cog belt conveyors **21,** as shown in Fig. 7. The configuration of the ejection mechanism **80,** as shown in Fig. 6, represents the rest state of the ejection mechanism **80.** When the ejection mechanism is at rest, as illustrated in Fig. 6, the upper surface **89a** of the discharge drum **85** is in the up position, as shown in Fig. 6. In this configuration, the upper surface **89a** lies subjacent to the conveying surfaces of the cog belt conveyors **21.** Accordingly, an object, such as a parcel **40,** may freely travel over the ejection mechanism **80,** if desired.

In order to eject the parcel **40** to an adjacent chute **45,** as shown in Fig. 7, the discharge drum drive motor **87** is energized when the parcel **40** moves into a position immediately above the ejection mechanism **80.** If it is desired that the parcel **40** be discharged to a chute **45** located to the right of the ejection mechanism **80,** the discharge drum drive motor is energized so that the discharge drum rotates in a clockwise manner, as shown in Fig. 7. It should be understood, however, that the parcel **40** may be discharged to the chute **45** located to the left of the ejection mechanism **80** by reversing the polarity on the discharge drum drive motor **87** in a manner well known to those skilled in the art.

As shown in Fig. 7, energization of the discharge drum drive motor rotates the discharge drum **85** clockwise or counterclockwise, as desired. As the discharge drum **85** rotates, one of the two convex opposing sides **86a** rotates through an arcuate path. The arcuate path begins below a plane defined by the upper surface of the cog belt conveyors **21** and rises above that plane through an opening defined by the space between the cog belt conveyors **21** or between the roller arrays, shown in Fig. 9 and discussed below. The arcuate path then terminates below the plane defined by the surface of the cog belt conveyors **21.**

Accordingly, one of the convex opposing sides **86a** contacts the lower surface of the parcel **40,** as shown in Fig. 7, and lifts the parcel **40** up and away from the surface of the cog belt conveyors **21.** The flexible ridges **92** disposed on the surfaces of the convex opposing sides provide contact surfaces to assist in movement of the parcel **40** by increasing friction between the convex opposing side and the parcel **40.**

As the discharge drum **85** continues to rotate, the parcel **40** is tilted away from the upper surfaces of the cog belt conveyors **21** and onto an idler roller **46** interposed between the cog belt conveyors **21** and the chutes **45,** as shown in Fig. 7. Finally, as the discharge drum **85** completes a full **180** degrees of rotation, the parcel **40** is translated onto the chute **45** and off the conveying surfaces of the cog belt conveyors **21**. Accordingly, rotation of the discharge drum **85,** as described, lifts, tilts, and translates the parcel **40** from the conveying surfaces of the cog belt conveyors **21,** and such rotation returns the discharge drum to a rest position, as shown in Fig. 6.

As shown in Fig. 9, an alternate embodiment of the present invention provides an ejection mechanism **80** disposed beneath the conveying surface of a roller bed conveyor **100.** The roller bed conveyor **100** defines a pair of spaced-apart arrays of rollers. It should be understood that the rollers may be powered or non-powered idler rollers. The rollers define axes of rotation which are transverse to the axis of rotation of the discharge drum **85.** The roller bed conveyor **100** and ejection mechanism **80** may be positioned adjacent to desired discharge destinations and interposed between two belt conveyors **105** and **110,** or the ejection mechanism and roller bed **100** configuration shown in Fig. 9 may form part of a continuous roller bed conveyor arrangement (not shown).

A tapered discharge drum **120** is shown in Figs. 10 and 11. As shown in Fig. 11, a transaxial cross-sectional view of the tapered discharge drum **120** shows a generally rectangular shaped discharge drum **120,** defining convex opposing sides **123a** and **123b** separated by the longer diameter of the drum. As shown in Fig. 10, the convex opposing sides **123a** and **123b** of the tapered discharge drum **120** define flexible ridges **126** and are tapered longitudinally, narrowing toward the end having the drive sheave **96** for engagement with the drum drive motor **87** via a drive belt **90,** as shown in Fig. 6. As shown in Fig. 1, the tapered discharge drum also tapers longitudinally narrowing in the direction opposite to the of travel of the cog belt conveyors **21.** Accordingly, the second end **125** of the tapered discharge drum **120** is wider than the first end **124.**

Discharge of a parcel **40** using the non-tapered discharge drum **85,** as described above, tends to rotate the parcel **40** as the parcel **40** is being discharged. Rotation of the parcel is a result of the forward movement of the parcel **40** along the cog belt conveyors **21** in concert with the lateral displacement of the parcel **40** by the discharge drum **85.** More specifically, as the tapered discharge drum **85** lifts the parcel **40** off one of the cog belt conveyors **21**, the other cog belt conveyor continues to urge the parcel in a forward direction, resulting in an unbalanced force that causes rotation of the parcel **40.** If desired, the tapered discharge drum **120** may be utilized to counteract rotation of the parcel **40** as it is discharged from the cog belt conveyors **21,** as shown in Fig. 7. That is, as a parcel **40** is discharged from the surface of the cog belt conveyors **21** by the tapered discharge drum, the parcel **40** is contacted first by the wider second end **125** of the tapered discharge drum **120** which urges the parcel **40** in a direction counter to the direction of rotation caused by the cog belt conveyor **21.** Accordingly, the parcel **40** is discharged from the conveying surfaces of the cog belt conveyors **21** without undesired rotation.

It should be understood the ejection mechanism need not be a drum and that the side of the ejection mechanism that engages the parcels **40** need not be a continuous surface.

The automated sorting system **10** is operated under the control of a digital controller, which may be a programmable logic controller (PLC) or a general purpose microprocessor which is found in a personal computer. Methods for programming such controllers to operate a sorting system of the type disclosed herein are conventional and known to those skilled in the art.

In operation, the number of and location of ejection mechanisms **80** and an identification code for each ejection mechanism **80** are input into the controller memory when movement of the sorting system **10** begins. Parcels **40** are induced sequentially onto the roller bed **50** from the feed conveyor **53,** as shown in Figs. 1 and 2. As shown in Fig. 1, a destination code for each parcel **40** is entered into the controller memory using an optical reader **51,** a keypad (not shown), or a voice recognition input device (not shown) before the parcel **40** is directed onto the cog belt conveyor system **20.** A suitable optical reader system **51** for imaging the destination code from a label affixed to the parcel **40** is shown in U.S. Patents 5,291,564; 5,308,960; 5,327,171; and 5,430,282 which are incorporated herein by reference. The roller bed **50,** with herringbone configuration rollers **52,** centers the parcel **40** so that the parcel **40** squarely aligns about the longitudinal axis of the cog belt conveyor system **20** and on the surfaces of the cog belt conveyors **21,** as shown in Fig. 1.

When the parcel **40** reaches a desired output destination, such as a chute **45** in a position overlying a desired ejection mechanism **80,** the PLC energizes the discharge drum drive motor **87** to actuate the ejection mechanism **80.** Accordingly, the discharge drum **85** rotates in the direction of the chute **45.** As the discharge drum **85** rotates about the discharge drum drive shaft **88,** one of the first and second convex shaped opposing sides arcuately translates between the pair of continuous cog belt conveyors **21** and above the upper surface of the continuous cog belt conveyors **21.** The discharge drum **85** rotates in the direction of the chute **45,** and the parcel **40** is lifted from the surfaces of the cog belt conveyors **21,** as shown in Fig. 7. As the discharge drum **85** continues to rotate in the direction of the chute **45,** the parcel **40** is tilted on to the idler roller **46,** as shown in Fig. 7. Finally, as the discharge drum completes its rotation, as described in detail above, the parcel **40** is discharged onto the chute **45,** as shown in Fig. 7. After the parcel **40** is discharged to the chute **45,** the discharge drum **85** stops in a rest position, as shown in Fig. 6, and stands ready to discharge a subsequent parcel **40.** If it is desired that package rotation be counteracted as the parcel is discharged to the chute **45,** a tapered discharge drum **120** may be utilized instead of the discharge drum **85,** as described above.

Use of the ejection mechanism **80,** as described, allows the parcel **40** to be discharged from the surfaces of the cog belt conveyors **21** independent of the speed of the parcel **40** moving along the cog belt conveyors **21.** Additionally, interaction of the flexible ridges **92** disposed along the surfaces of the convex opposing sides of the discharge drum **85** or the tapered discharge drum **120** reduces noise created by the impact of the discharge drum **85** with the overlying parcel **40.** Advantageously, failure of an individual ejection mechanism **80,** or the cessation of use of an individual ejection mechanism **80** for the maintenance purposes does not create downtime for the cog belt conveyor system **20.** In the event of the cessation of use of an individual ejection mechanism **80,** the PLC may direct parcels to be discharged to alternate discharge destinations and bypass the stopped ejection mechanism **80.** Furthermore, the discharge drums may be quickly and easily replaced. Accordingly, downtime of the cog belt conveyor system **20** is reduced.

Reference is now made to Figs. 12-37 in discussing the general concept of providing a relatively narrow package-ejecting disc, which can be used within a gap defined by two conveyor belts or other conveying item. As will be discussed in detail further below, the disc can be substantially round in shape, or can include a "flat spot", and can also either be of substantially unitary construction or multi-segmented.

Reference is first made to Figs. 12 and 13 in order to explain the general narrow package-ejecting disc concept. Fig. 12 is a top plan view of a portion of a conveyor system illustrating an ejection disc **100** located between upstream and downstream conveyor belt assemblies **120, 121,** respectively, and rotatably driven about an axis **105.** Fig. 13 is an "upstream" sectional view taken generally along the conveying axis, showing an ejection disc 100 ejecting a package to the viewer's right.

As shown in Figs. 12 and 13, the parcel **112** is moved along a generally straight conveyor axis **113,** being first positioned atop an upstream conveyor belt assembly **120,** and is conveyed towards and onto a second downstream conveyor belt assembly **121,** unless it is ejected. An ejection disc **100** is rotatably located within a relatively narrow transverse "slot" or "gap" **110** intermediate the two belts of the two assemblies **120, 121** to provide the ejection. It should be understood that the gap is substantially narrow in that it is shorter along the conveying dimension that in its transverse, perpendicular dimension.

A side chute **112** is positioned at approximately 90 degrees relative to the conveying axis **113,** and received ejected packages.

In Fig. 12, a parcel **12** is shown in approaching the ejection disc **100.** If the ejection disc **100** ejects the parcel **112,** the parcel will be urged into the area of a side chute **114.** If the ejection disc **100** does not eject the parcel **112** as shown in Fig. 13, the parcel is passed from the upstream conveyor belt assembly **120** to the downstream conveyor belt assembly **121.** As may be seen, the two conveyor belts within the two conveyor belt assemblies include substantially planar upper conveying surfaces, which lie substantially along the same horizontal plane.

As shown in Fig. 13 and as discussed in detail elsewhere, the disc **100** can be round or may include a truncated section defined in part by a flat spot **102.** In either case, the peripheral edge **101** of the ejection disc **100** is brought into contact with the underside of the package as discussed later, such that the parcel is discharge to the viewer's right as viewing Fig. 13.

The gap **110** can be thought of as having a thickness defined by the closest distance shown between the two conveyor belts, and can be thought to extend above, below, and to intersect the conveying axis.

Figs. 14-17 illustrate the use of a ejection disc **200** with a flat spot defining a truncated section. Under this concept, a "truncated", disc is used which fits within the transverse slot defined by the end of one belt conveyor and the beginning of a second, downstream belt conveyor. This disc includes a truncated section which operates much the same way as the "truncated" drum described earlier. The truncated disc is rotatably mounted on a fixed axis, and selective rotation causes the disc to engage and eject a package, when rotation is suitably timed.

Reference is now made to Fig. 14, which is a side elevational view of a conveyor configuration. A package **212** can be moved from an upstream conveyor belt assembly **220** to a downstream conveyor belt assembly **221,** unless ejected by a ejection disc **200** as described below. As may be seen, the two conveyor belts within the two conveyor belt assemblies **220, 221,** include substantially planar upper conveying surfaces, which lie substantially along the same horizontal plane.

As in the configuration of Figs. 12 and 13, the ejection disc **200** is positioned within and rotates within a transverse gap **210** intermediate the two belts assemblies **220, 221.**

As shown in Fig. 15, the ejection disc **200** includes a flat section **202.** When the disc **200** is in its unengaging or "neutral" position as shown in Fig. 14, the flat section **202** allows passage of the package. Otherwise, the disc **200** is at least partially in the conveyor path.

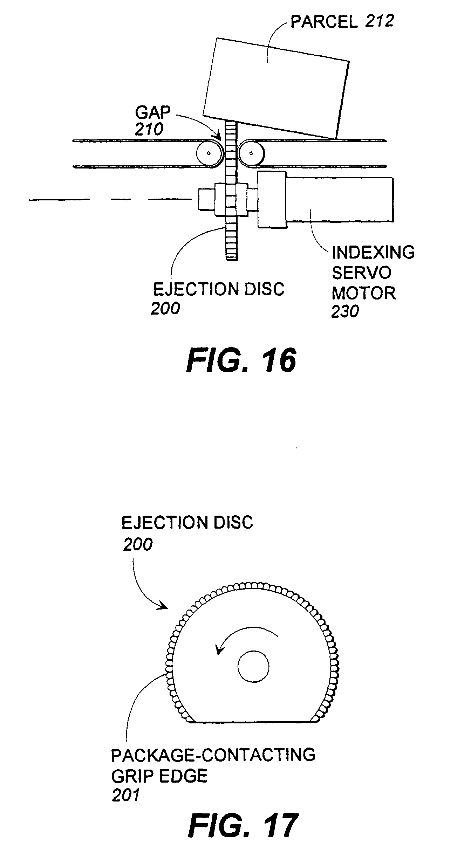

Figs. 16 and 17 illustrate what happens when the ejection disc is rotated 180 degrees about its rotational axis **205** from that shown in Figs. 14 and 15. As may be seen, when the ejection disc **200** is actuated through rotation, its curved portion (having a gripping surface) rises above the conveyor surface, causing the package to be lifted. As the disc is likewise rotating, this engagement causes the package to encounter a force substantially 90 degrees in relation to the conveying axis of the package moving from upper conveyor belt assembly **220** to upper conveyor belt assembly **221.**

As noted above, the ejection disc **200** is rotatably mounted relative to the conveying path of the packages in contacts. This rotational axis, in the configuration shown in Figs. 14-17, is substantially stationary, horizontal, and parallel to the conveying axis of the packages above, although slight variations may be provided as needed. The conveying axis lies substantially along a drive shaft **231** which is rotatably driven by an indexing servo motor **230.** This indexing servo motor is configured to be selectively activated to rotate the disc 200 in either rotational direction, allowing ejection to be provided to either side of the conveying axis.

Fig. 15 and 17 show the outer edge of the ejection disc includes a plurality of teeth **203,** which may be comprised of rubber.

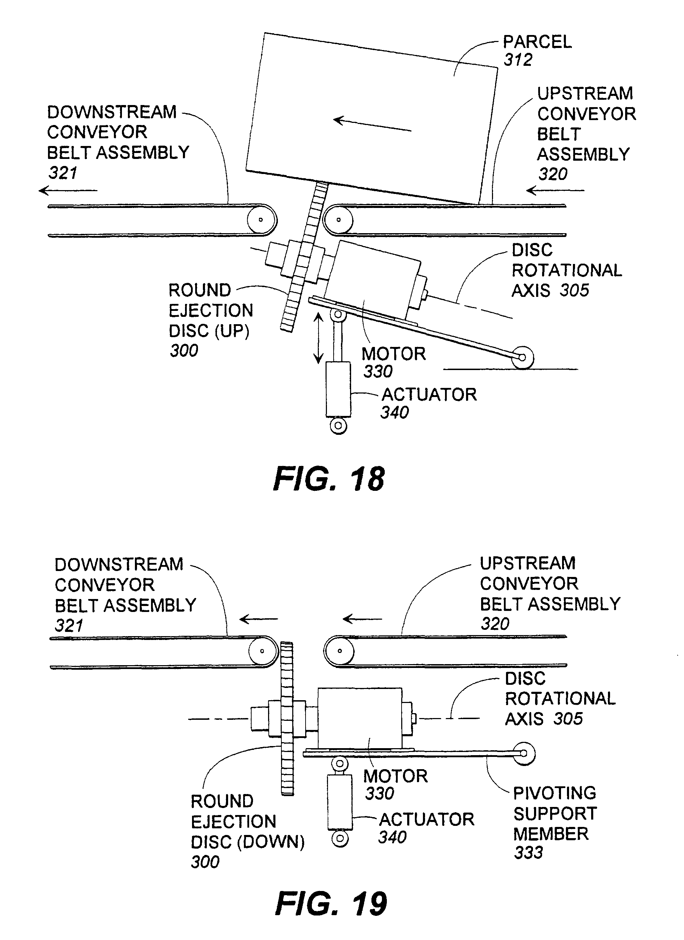

Reference is now made to Figs. 18 and 19, which illustrate the use of a round ejection disc **300** which is indexed upwardly above the conveying surface within the gap **310** between two conveyors by use of a pivoting action.

This configuration includes a round ejection disc **300** mounted to a shaft which is rotatably driven by a motor **330.** The motor **330,** which can be continuously running if desired, is mounted to a pivoting support member **333** which is pivotably mounted relative to a stationary conveyor frame member (not shown). This pivoting support member **333** is pivotably mounted about a pivoting axis which is substantially horizontal as well as transverse to and below the package conveying axis path.

A linear actuator **340** is provided which actuates the frame member **333,** the motor **330,** and the disc **300** from a retracted (non ejecting) position (see Fig. 18) to an extended (ejecting) position (see Fig. 19).

As may be seen, when the actuator **340** (which may be an air or other extendable cylinder) urges the disc **300** upwardly, the rotational axis **305** goes from being substantially horizontal to inclined. Hydraulic, pneumatic, or other suitable actuation means known in the art can be used.

The narrow, substantially circular, ejection disc **300** fits within the transverse "slot" **310** defined by the end of an upstream belt conveyor assembly **320** and a downstream and the beginning of a second, downstream belt conveyor assembly **321.** The circular disc **300** is rotatably mounted on a movable rotational axis **305.** While in its "neutral" position as shown in Fig. 22, the disc **300** does not contact the packages as they pass from the upstream to the downstream conveyor. However, when actuated, the disc **300,** being moved upwardly to its "engaging" position shown in Fig. 21, contacts the package on its circular edge. Rotation of the disc causes the package to be discharged sidewardly.

The above motor **330** can be reversible to allow for discharge to either side of the conveyor. If desired, the motor can be left continuously running allowing the actuator to determine when ejection occurs. The motor **330,** as with all the motors described in this application can be selected as known in the art.

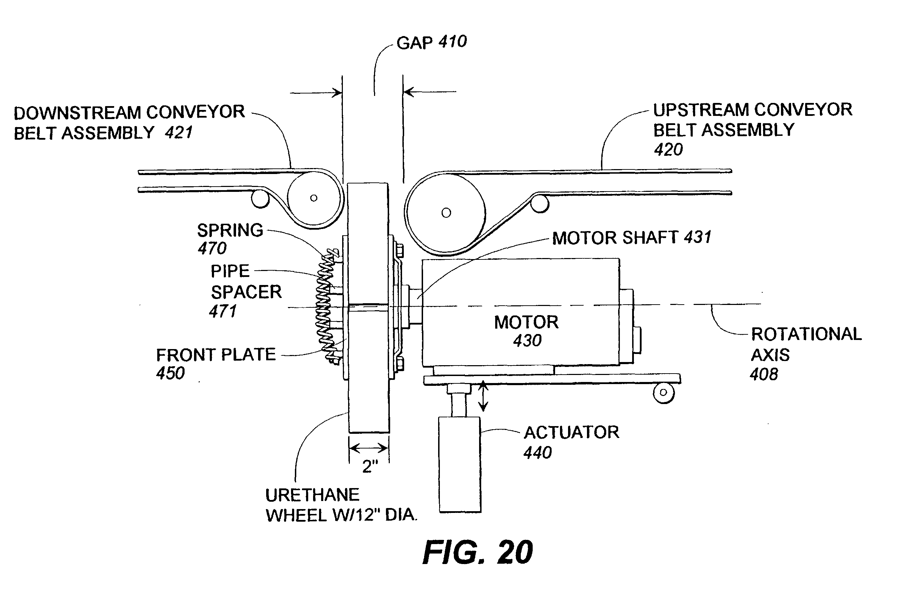

This concept. shown generally in Figs. 20-37, generally relates to the use of a "quick change" feature which allows the narrow discs be quickly removed and replaced with little or no tools and with minimal disturbance to adjacent machinery. This is very important to those operating and maintaining said machinery, in that downtime due to repairs are desired to be at a minimum.

Figs. 20-28 show a first multi-segment example, with a multi-segmented ejection disc **400.**

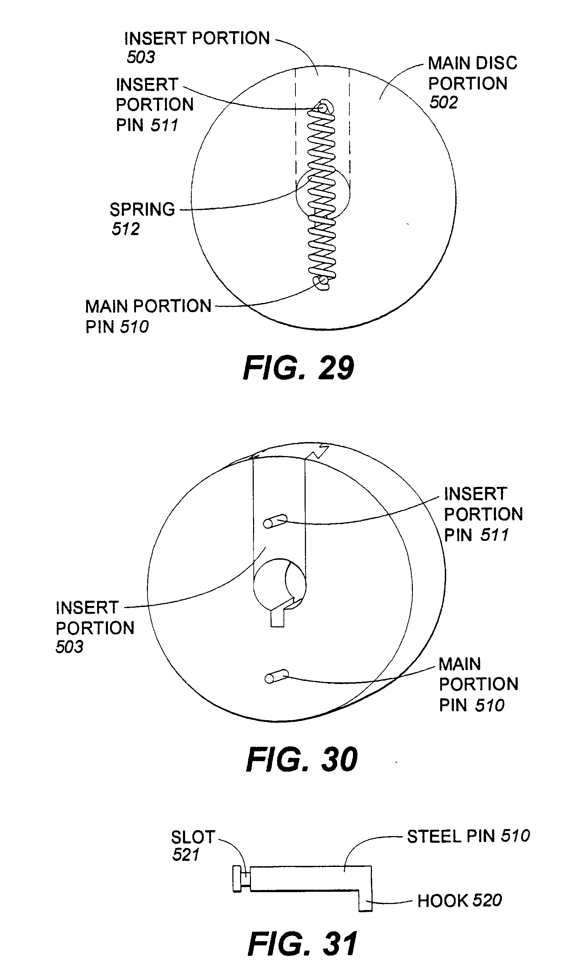

Figs. 29-35 show a second multi-segment example, including a multi-segmented ejection disc **500.**

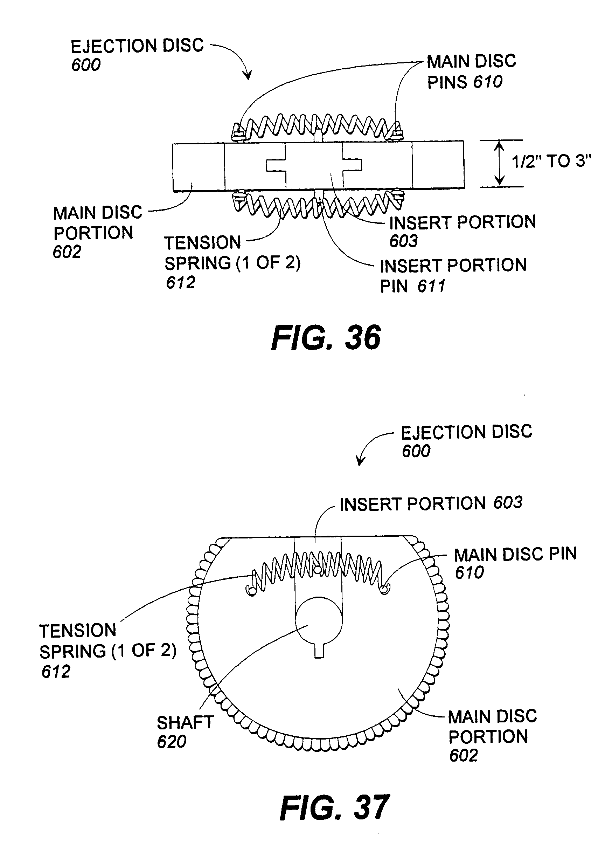

Figs. 36-37 show a third multi-segment example, including a multi-segmented ejection disc **600.**

Figs. 20-28 show a first multi-segmented disc example, including a multi-segmented ejection disc **400** which generally includes a pair of half wheel segments **402,** which are captured between a front plate **450** and a rear flanged plate assembly **460** and maintained in place by use of a tension spring **470,** to form a substantially circular ejection disc **400,** although a wheel with a flat spot is readily contemplated.

Fig. 20 illustrates the multi-segmented round ejection disc **400** in position within a gap **410** between upstream and downstream conveyor belt assemblies **420, 421,** respectively. The ejection disc **400** is mounted to a shaft **431** which is rotatably driven by a gear motor **430.** The gear motor **430** is mounted to a pivotable support member **433** and actuated about pivoting axis by an actuator **440.** The pivotable support member **433** is pivotably mounted relative to an unshown stationary frame member about a pivoting axis which is substantially horizontal as well as transverse to and below the package conveying axis path.

The actuator **440** has essentially two positions, an "ejecting position", and a "retracted" position, and is configured to operate such that the multi-segmented ejection disc 400 can be raised generally upwardly and downwardly within the gap **410** much as the disc **300** moved as shown in Figs. 18 and 19.

For discussion purposes, the configuration will be assumed to have a "front" and a "back", although such terms are not to be construed as being limiting. The "front" of the ejection disc **400** is the part oriented to the viewer's left as viewing Fig. 20.

As shown in Fig. 22, attached to the shaft **431** of the motor **430** is a rear flanged plate assembly **460,** which includes a rear plate **461,** a rear flange **464,** and a set screw **465.** As shown in Fig. 21, the rear plate **461** includes two opposing large slots **462,** and also includes two small notches **463.** The large slots **462** are oriented approximately 90 degrees from the opposing smaller notches **463.** The rear flange **464** is substantially rigidly attached to the rear plate **461,** by welding or other means known in the art. The set screw **465** allows for attachment of the rear flange **464** to the shaft **431,** as known in the art.

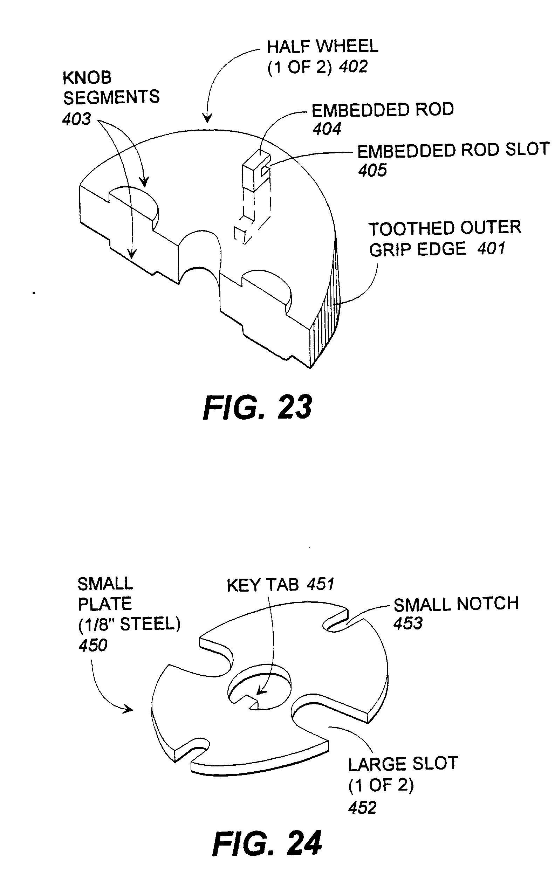

Reference is now made to Fig. 23, which is a pictorial isolated view of a half wheel member **402,** two of which are used for each disc **400.** Each of the half wheel members **402** includes a corresponding embedded rod **404.** At the front end of each embedded rod is defined in embedded rod slot **405** or other suitable engaging means, and at the opposite, rear, end is an embedded rod hook **406** or other suitable engaging means. As described elsewhere in this application, the embedded rod slots **405** are each configured to accept one end of a tension spring **470,** and the embedded rod hooks **406** are configured to pass through slots **463** of the rear flange plate **461,** and engage the rear side of the rear flange plate **461.**

Each of the half wheel members **402** is configured mostly of molded urethane in one preferred embodiment with the exception of the metal embedded rod **404.** In one example, the rods **404** have a rectangular transverse cross section.

Reference is now made to Fig. 24, which is an illustration of a front steel plate **450** of approximately 1/8 inch in thickness. This front plate includes two opposing large slots **452,** and two opposing small notches **453.** The opposing large slots **452** and two opposing small notches **453** of the steel front plate **450** are similar in configuration to those provided in the rear plate **461** of the rear flange plate assembly **460.**

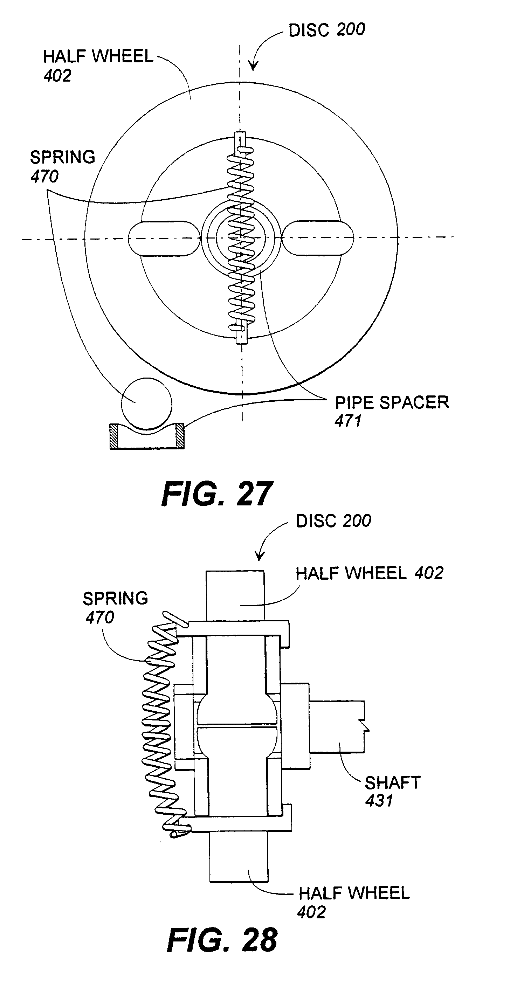

As shown in Figs. 27 and 28, a tension spring **470** and a "pipe" **471** are also included. A key **466** is used to provide a keyed connection as described later.

As shown in Fig. 22, the rear flanged plate assembly **460** is mounted to the shaft **431** of the gear motor **430,** by passing the collar-shaped rear flange **464** over the substantially circular outline of the shaft **431.** When the rear flange **464** is positioned at its desired location, a set screw **465** is installed in order to fix the rear flange **464** to the shaft **431** of the gear motor **430.** A key as known in the art provided a keyed engagement between the rear flanged plate assembly **460** and the shaft **431.**

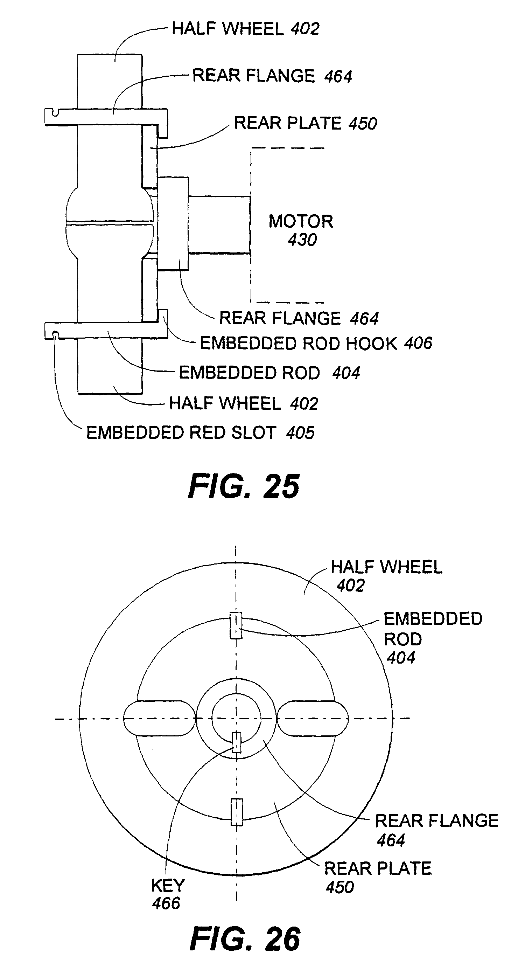

After the rear flanged plate assembly **460** is mounted to the shaft **431,** the two half wheel members **402** are situated as shown in Fig. 25, and held in place by the use of a front plate **450** as shown in Fig. 27.

When the two half wheel members **402** are in place as shown in Fig. 26, it may be seen that the half knob segments **403** of the half wheel members **402,** combine to provide substantially elliptically-shaped knobs, shown well in Fig. 26. These knobs are partially contained by the large cut outs of the front plate **450,** which serves to capture the half wheel members **402** between the front plate **450** and the rear plate **461** of the rear flange plate assembly **460.**

When installed, the embedded rods **404** of the half wheel members are configured such that their hooks **406** are engaged with the "rear" side of the rear flange plate **461,** as shown in Figs. 25 and 26.

After positioned as shown in Fig. 25, the front plate **450** is positioned into place as shown in Fig. 27. As may be understood, the front plate is placed relative to the half wheels and their embedded rods **404,** such that the front ends of the embedded rods pass through the small notches **453** of the front plate **450.**

After the front plate **450** is in place, a tension spring **470** is stretched such that its two ends engage respective slots **405** in the front ends of the embedded rods **404,** such that the spring ends are engaged with the respective embedded rod slots **405.** However, before the spring **470** is situated into place, a pipe spacer **471** is placed in engagement with the front plate **450.** The spring is then positioned into place, such that the spring is engaged at its ends with the embedded rods, and the medial portion of the spring **470** biases radially against the end of the substantially short pipe spacer **471,** which biases inwardly onto the front plate **450.**

As shown in Fig. 27, a curved portion is provided in the pipe spacer to accommodate the round nature of the spring, and to discourage removal of the pipe spacer.

The pipe spacer **471,** in one example, fits about the end of the shaft **431** of the gear motor **430.** This engagement, combined with the biasing of the spring, tends to maintain the pipe spacer in place.

A key **466** as known in the art to provide suitable engagement between the rear flange **464** and the shaft **431,** to discourage rotation therebetween.

Operation of the configuration shown in Figs. 20-28 is similar to that discussed in reference to Figs. 18 and 19. A motor **430** is used which drives the ejection disc **400,** such that when the motor **430** and rotating disc **400** is pivoted upwardly by an actuator **440,** the ejection disc engages and discharges packages passing gap **410.**

Although this configuration includes the use of an pivoting configuration, if a flat spot is provided in one or both of the half wheels **402,** as may be understood, no pivoting is required; the motion will be as described earlier with respect to Figs. 14-17.

In order to change a wheel configuration, a user will disengage the spring **470** from its location, remove the pipe spacer **471,** remove the front plate **450,** and remove and replace as needed either or both of the half wheels **402.** The front plate **450** is then positioned as shown in Fig. 27 and 20, and the pipe spacer **471** and spring **470** are situated into place as shown in Figs. 20, 27, and 28.

As noted above, although the multi-segmented ejection disc **400** is shown as having a circular gripping perimeter edge, a truncated portion could also be provided by providing such a truncation in at least one of the half wheel segments **402.**

Figs. 29-35 show a second multi-segment disc **500**, including a main disc portion **502,** an insert portion **503,** and a spring **512.**

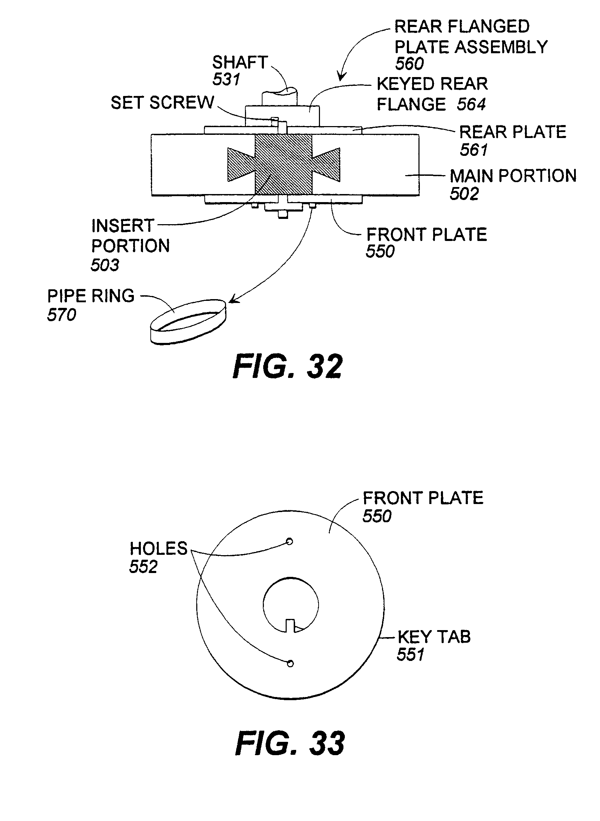

The configuration of Figs. 29-35 includes a multi-segmented urethane wheel. The wheel portion which contacts the package takes the form of two urethane segments, a main disc portion **502** and an insert portion **503.** The main disc portion **502** includes a large slot therein, and the smaller insert portion is configured to slide within the slot of the main disc portion. As shown in Fig. 32, this insert can include a beveled configuration, which tends to provide engagement between it and the main wheel portion. These urethane members **502, 503,** are drawn together by the use of a tension spring **512,** which has each of its ends engaging one of the headed portions of embedded steel pins.

As shown in Figs. 29 and 30, the main disc portion **502** includes an embedded pin **510.** The embedded pin includes a rear hook **520,** and includes a front "headed" portion which defines an annular slot **521.**

The main disc portion **502** also includes an insert-receiving slot which at its end includes a substantially arcuate portion having a keyway slot therein. The keyway slot is configured to accept a key as described elsewhere.

The insert portion **503** includes an insert portion pin **511** similar in configuration to pin **510** of the main portion **502.** The insert portion **503** includes an arcuate end, which is configured to conform substantially to a peripheral portion of a shaft as described elsewhere.

Referring now also to Figs. 32 and 33, the rear flanged plate assembly **560** also includes a rear plate **561,** a rear flange **564** rigidly attached thereto, and is keyed as known in the art to engage the shaft.

The front plate **550** is configured to include a key tab **551** to engage a keyway in the drive shaft **531,** and includes a pair of through holes **552** to allow passage of the through pins **510, 511.** A pipe ring 570 is also used as described below.

The outer surface of both portions **502, 503** is provided with gripping teeth or another suitable gripping surface such as known in the art.

As shown in Fig. 32, the rear flanged plate assembly **560** fits onto a shaft **531** of a motor **530.**

The two urethane portions **502, 503,** are configured to fit together in their configuration shown in Fig. 32, such that the front plate and the rear plate **561** of the rear plate assembly **560** tend to capture the urethane portions **502, 503,** along the length of the shaft **531** of the motor **530.** The urethane portions **502, 503,** are drawn together by the use of a spring **512,** which has each of its ends engaging one of the headed portions of the embedded steel pins and captures the pipe ring **570** as shown.

A keyway is provided to allow keyed engagement between the shaft **531** of the gear motor **530** and the front plate **550,** the main urethane wheel member **502,** and the rear flange plate assembly **560.**

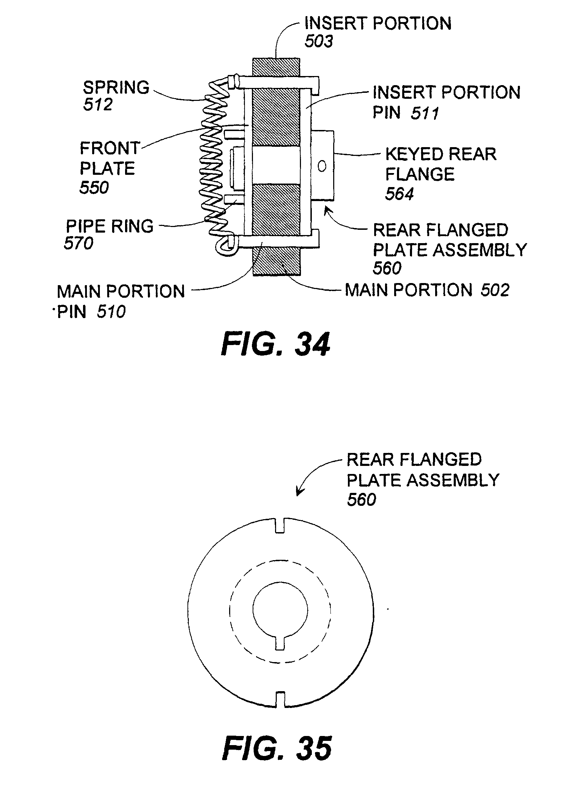

To replace one or both of the urethane portions **502, 503,** the spring **512** is first removed, followed by removal of the front plate **550.** The urethane portions **502, 503,** can then be separated by sliding the smaller member **503,** out of the main slot of the larger member **502.** Replacement of either or both of the urethane members can then be effected. After the urethane members are in place, the front plate **550** is then replaced, followed by the spring **512.** If desired, a pipe ring **570,** as shown in Fig. 32, can be used to fit underneath the spring **512** as shown in Fig. 34.

Operation of the disc **500,** being round, is similar to the disc **400,** although a flat spot may be alternately provided to be used with the pivoting configuration described in reference to Figs. 18 and 19.

Figs. 36 and 37 illustrate top plan and side elevational views, respectively of third multi-segmented ejection disc **600** including a main disc portion **602** and an insert portion **603** slidably insertable into the main portion in a manner similar to that described previously, with respect to, for example, Fig. 30. However, in this configuration, a tension spring **612** is used which engages at its ends to two respective pins each of which are installed in the main disc portion on opposing sides of the main portion's insert-receiving slot. The medial portion of the spring **612** is stretched around a pin member extending through the insert portion **603** and having upwardly (as shown in the drawings) directed hooks which are biased downwardly (as shown in the drawings), such that the spring force tends to cause the plastic insert to remain seated within its position in the main wheel portion.

This configuration may be used with a separate means (not shown) to attach the combination of the two elements 602, 603 to a motor shaft **620,** or may be modified to operate in conjunction with other mounting elements such as a flanged rear disc assembly and front disc assembly, motor, etc., to be supported and driven thereby in manners similar to those previously discussed.

The multi-segmented disc **600** includes a "flat spot", although as shown elsewhere in this application such a multi-segment disc could not have a flat section.

The thickness of the multi-segmented disc **600** as shown in Fig. 36, as well as the other discs may be within the range of 1/2 inch to 3 inches, and can be approximately 12 inches in peripheral diameter although other configurations are contemplated.

The peripheral edge of the disc **600** intended to engage packages may be provided with engaging teeth or other suitable frictional engaging means known in the art.

Therefore it may be seen that the invention provides an improved conveying and discharge apparatus which provides numerous improvements over the previously-described prior art, not the least of which includes a simple yet effective discharge device which can be easily replaced with little downtime.

While this invention has been described in specific detail with reference to the disclosed embodiments, it will be understood that many variations and modifications may be effected within the scope of the invention as described in the appended claims.

## Claims

1. A mechanism including an ejection member for ejecting an object from a support surface, the improvement comprising:
the ejection member (85, 120) being elongate and mounted for rotation about a fixed longitudinal axis subjacent to said support surface **characterised in that**, said ejection member has elongate first and second opposing sides (86a, 86b), said support surface defines an opening for receiving one of said elongate first and second opposing sides; and
means (87) for rotating said ejection member about said axis such that said one of said elongate first and second opposing sides rotates through said opening and above a plane defined by said support surface to eject said object from said support surface.

2. The ejection mechanism of claim 1, wherein said rotation of said one of said elongate first and second opposing sides defines an arcuate path, said arcuate path beginning below said plane defined by said support surface, and said arcuate path terminating below said plane defined by said support surface.

3. The ejection mechanism of claim 1 or claim 2, wherein, as said one of said elongate first and second sides rotates through said opening and above said plane defined by said support surface, said one of said elongate first and second sides engages a lower surface of said object, said object being lifted from said support surface, said object being tilted away from said support surface, and said object being discharged to a designated discharge location.

4. The ejection mechanism of any preceding claim, wherein said elongate first and second opposing sides are generally convex shaped.

5. The ejection mechanism of claim 4, wherein said generally convex shaped elongate first and second sides define a plurality of flexible ridges.

6. The ejection mechanism of claim 5, wherein said ejection member has the shape of an elongate asymmetric drum mounted on a horizontal axis below said support surface.

7. The ejection mechanism of claim 6, wherein the drum defines a generally rectangular transaxial cross section having upper and lower surfaces and first and second opposing sides, said first and second opposing sides being adjacent to said upper and lower surfaces.

8. The ejection mechanism of claim 7, wherein said drum further comprises first and second ends, said first and second opposing sides being interposed between said first and second ends, and wherein said first and second opposing sides taper from said second end to said first end such that said discharge drum is wider at said second end then at said first end.

9. The ejection mechanism of claim 8, wherein said first and second sides taper from said second end to said first end in a direction opposite the direction of travel of said pair of continuous conveyors.

10. The ejection mechanism of claim 9, wherein each of said first and second opposing sides defines flexible ridges.

11. The ejection mechanism of claim 5,
wherein said ejection member has elongate first and second ends, said elongate first and second sides being interposed between said first and second ends; and
wherein each of said elongate first and second sides tapers from said second end to said first end, such that the width of said ejection member is greater at said second end than at said first end.

12. The ejection mechanism of any preceding claim, wherein said support surface further comprises:
a pair of continuous conveyors (21) for transporting said object, said pair of continuous conveyors disposed in parallel, spaced-apart relation; and
said ejection mechanism disposed medially of said pair of continuous conveyors.

13. The ejection mechanism of claim 12, wherein said opening defined by said support surface comprises a space interposed between said pair of continuous conveyors.

14. The ejection mechanism of claim 12 or claim 13, further comprising a plurality of discharge destinations disposed adjacent to and on either side of said conveyors.

15. The ejection mechanism of any of claims 12 to 14, further comprising a mechanism for driving said pair of continuous conveyors, said mechanism comprising:
a drive means (87) configured for engagement with each of said pair of continuous conveyors, said drive means applying rotational force to said pair of continuous conveyors;
a pair of snub rollers (44) for maintaining said engagement of said drive means with said pair of continuous conveyors; and
a tensioning mechanism (54) for maintaining desired tension in said pair of continuous conveyors.

16. The ejection mechanism of claim 15, wherein said tensioning mechanism comprises:
a spring (55) for urging said drive means into engagement with said pair of continuous conveyors.

17. The ejection mechanism of claim 16, wherein said tensioning mechanism further comprises:
a spring retaining member (52) interposed between said spring and said drive means; and
a means (57) for compressing and decompressing said spring against said spring retaining member.

18. The ejection mechanism of claim 17, wherein said means for compressing and decompressing said spring, comprises a hydraulic cylinder.

19. The ejection mechanism of any of claims 15 to 18, wherein said drive means comprises a gear motor (38) configured for engagement with a toothed surface of each of said pair of continuous conveyors.

20. The ejection mechanism of any of claims 1 to 11, wherein said support surface further comprises
a roller bed conveyor for transporting said object, said roller bed conveyor defining a pair of spaced-apart arrays of rollers, said rollers defining axes of rotation, said axes of rotation being transverse to said axis of rotation of said ejection member; and
said ejection mechanism disposed medially of said pair of spaced-apart arrays of rollers.

21. The ejection mechanism of claim 20, wherein said opening defined by said support surface comprises a space interposed between said pair of spaced-apart arrays of rollers.

22. The ejection mechanism of any preceding claim, wherein said means for rotating said ejection member comprises an electric motor.

23. A method of ejecting an object from a support surface by use of a rotating ejection member (85, 12), according to any preceeding claims, the improvement to said method comprising the steps of:
providing the ejection member with an elongate first side;
rotating the ejection member about a fixed longitudinal axis beneath said support surface;
rotating the first elongate side of said ejection member through an opening defined in said support surface;
contacting said object with said first elongate side of said ejection member; and
discharging said object from said support surface.

24. The method of claim 23, wherein said step of discharging said object includes the step of:
lifting said object from said support surface;
tilting said object away from said support surface; and
translating said object laterally off said support surface to a desired discharge destination.

25. The method of claim 23 or claim 24, further comprising the step of
conveying said object along said support surface to a desired discharge destination.

26. The method of claim 25, further comprising the step of:
counteracting rotation of said object during step of discharging said object from said support surface by use of an ejection member in the form of an elongate tapered discharge drum.

27. The method of any of claims 23 to 26, wherein said support surface comprises a pair of continuous conveyors.

## Patentansprüche

1. Mechanismus mit einem Auswurfelement zum Auswerfen eines Gegenstands von einer Stützfläche, wobei die Verbesserung folgendes umfaßt:
das Auswurfelement (85, 120), das länglich ausgeführt und zur Drehung um eine feste Längsachse unterhalb der Stützfläche montiert ist, **dadurch gekennzeichnet, daß** das Auswurfelement eine länglich ausgeführte erste Seite und eine länglich ausgeführte zweite Seite (86a, 86b), die gegenüberliegend angeordnet sind, besitzt, wobei die Stützfläche eine Öffnung definiert, die die länglich ausgeführte erste Seite oder die länglich ausgeführte zweite Seite, die gegenüberliegend angeordnet sind, aufnehmen kann; und
Mittel (87) zur Drehung des Auswurfelements um die Achse, so daß sich die länglich ausgeführte erste Seite oder die länglich ausgeführte zweite Seite, die gegenüberliegend angeordnet sind, durch die Öffnung und oberhalb einer von der Stützfläche definierten Ebene dreht, um den Gegenstand von der Stützfläche auszuwerfen.

2. Auswurfmechanismus nach Anspruch 1, bei dem die Drehung der länglich ausgeführten ersten Seite oder der länglich ausgeführten zweiten Seite, die gegenüberliegend angeordnet sind, einen bogenförmigen Weg definiert, der unterhalb der von der Stützfläche definierten Ebene beginnt und unterhalb der von der Stützfläche definierten Ebene endet.

3. Auswurfmechanismus nach Anspruch 1 oder 2, bei dem, während sich die länglich ausgeführte erste Seite oder die länglich ausgeführte zweite Seite durch die Öffnung und oberhalb der von der Stützfläche definierten Ebene dreht, die länglich ausgeführte erste Seite oder die länglich ausgeführte zweite Seite in eine untere Oberfläche des Gegenstands eingreift, wobei der Gegenstand von der Stützfläche abgehoben, abgekippt und zu einer festgelegten Austragsstelle ausgetragen wird.

4. Auswurfmechanismus nach einem der vorstehend aufgeführten Ansprüche, bei dem die länglich ausgeführte erste Seite und die länglich ausgeführte zweite Seite, die gegenüberliegend angeordnet sind, eine allgemein konvexe Form aufweisen.

5. Auswurfmechanismus nach Anspruch 4, bei dem die allgemein konvex geformte, länglich ausgeführte erste Seite und die allgemein konvex geformte, länglich ausgeführte zweite Seite eine Vielzahl flexibler Rippen definieren.

6. Auswurfmechanismus nach Anspruch 5, bei dem das Auswurfelement die Form einer länglichen, asymmetrischen Trommel besitzt, die auf einer horizontalen Achse unterhalb der Stützfläche montiert ist.

7. Auswurfmechanismus nach Anspruch 6, bei dem die Trommel einen allgemein rechtwinkligen, transaxialen Querschnitt mit einer oberen Oberfläche und einer unteren Oberfläche sowie einer ersten Seite und einer zweiten Seite, die gegenüberliegend angeordnet sind, definiert, wobei die erste Seite und die zweite Seite, die gegenüberliegend angeordnet sind, an die obere Oberfläche und die untere Oberfläche angrenzen.

8. Auswurfmechanismus nach Anspruch 7, bei dem die Trommel weiterhin ein erstes Ende und ein zweites Ende umfaßt, wobei sich die erste Seite und die zweite Seite, die gegenüberliegend angeordnet sind, zwischen dem ersten Ende und dem zweiten Ende befinden, und wobei sich die erste Seite und die zweite Seite, die gegenüberliegend angeordnet sind, vom zweiten Ende zum ersten Ende hin so verjüngen, daß die Austragstrommel am zweiten Ende breiter als am ersten Ende ist.

9. Auswurfmechanismus nach Anspruch 8, bei dem sich die erste Seite und die zweite Seite vom zweiten Ende zum ersten Ende hin in einer der Bewegungsrichtung des Paares kontinuierlicher Fördervorrichtungen entgegengesetzten Richtung verjüngen.

10. Auswurfmechanismus nach Anspruch 9, bei dem die erste Seite und die zweite Seite, die gegenüberliegend angeordnet sind, jeweils flexible Rippen definieren.

11. Auswurfmechanismus nach Anspruch 5, bei dem das Auswurfelement ein länglich ausgeführtes erstes Ende und ein länglich ausgeführtes zweites Ende besitzt, wobei die länglich ausgeführte erste Seite und die länglich ausgeführte zweite Seite zwischen dem ersten Ende und dem zweiten Ende angeordnet sind; und
bei dem sich die länglich ausgeführte erste Seite und die länglich ausgeführte zweite Seite vom zweiten Ende zum ersten Ende hin jeweils so verjüngen, daß die Breite des Auswurfelements am zweiten Ende größer als am ersten Ende ist.

12. Auswurfmechanismus nach einem der vorstehend aufgeführten Ansprüche, bei dem die Stützfläche weiterhin umfaßt:
ein Paar kontinuierlicher Fördervorrichtungen (21) zum Transportieren des Gegenstands, das parallel und mit Abstand voneinander angeordnet ist; und
wobei der Auswurfmechanismus in der Mitte des Paars kontinuierlicher Fördervorrichtungen angeordnet ist.

13. Auswurfmechanismus nach Anspruch 12, bei dem die von der Stützfläche definierte Öffnung einen zwischen dem Paar kontinuierlicher Fördervorrichtungen befindlichen Raum umfaßt.

14. Auswurfmechanismus nach Anspruch 12 oder 13, der weiterhin eine Vielzahl von Austragsstellen umfaßt, die sich angrenzend an die Fördervorrichtungen und auf beiden Seiten davon befinden.

15. Auswurfmechanismus nach einem der Ansprüche 12 bis 14, der weiterhin einen Mechanismus zum Antrieb des Paars kontinuierlicher Fördervorrichtungen umfaßt, wobei der Mechanismus folgendes umfaßt:
ein Antriebsmittel (87), das für einen Eingriff mit jedem der Paare kontinuierlicher Fördervorrichtungen konfiguriert ist, wobei das Antriebsmittel Drehkraft auf das Paar kontinuierlicher Fördervorrichtungen überträgt;
ein Paar Dämpferrollen (44), um den Eingriff des Antriebsmittels mit dem Paar kontinuierlicher Fördervorrichtungen aufrechtzuerhalten; und
einen Spannmechanismus (54), um die gewünschte Spannung in dem Paar kontinuierlicher Fördervorrichtungen aufrechtzuerhalten.

16. Auswurfmechanismus nach Anspruch 15, bei dem der Spannmechanismus folgendes umfaßt:
eine Feder (55), um das Antriebsmittel in Eingriff mit dem Paar kontinuierlicher Fördervorrichtungen zu drükken.

17. Auswurfmechanismus nach Anspruch 16, bei dem der Spannmechanismus weiterhin folgendes umfaßt:
ein Federhalteteil (52), das zwischen der Feder und dem Antriebsmittel angeordnet ist; und
ein Mittel (57) zum Zusammendrücken und Entlasten der Feder gegenüber dem Federhalteteil.

18. Auswurfmechanismus nach Anspruch 17, bei dem das Mittel zum Zusammendrücken und Entlasten der Feder einen Hydraulikzylinder umfaßt.

19. Auswurfmechanismus nach einem der Ansprüche 15 bis 18, bei dem das Antriebsmittel einen Getriebemotor (38) umfaßt, der jeweils für einen Eingriff in eine gezahnte Oberfläche an jedem Paar kontinuierlicher Fördervorrichtungen konfiguriert ist.

20. Auswurfmechanismus nach einem der Ansprüche 1 bis 11, bei dem die Stützfläche weiterhin folgendes umfaßt:
eine Rollenbettfördervorrichtung zum Transportieren des Gegenstands, die ein Paar Rollenreihen, die mit Abstand voneinander angeordnet sind, definiert, wobei die Rollen Drehachsen definieren, die quer zur Drehachse des Auswurfelements verlaufen; und
den Auswurfmechanismus, der sich in der Mitte des Paars mit Abstand angeordneter Rollenreihen befindet.

21. Auswurfmechanismus nach Anspruch 20, bei dem die von der Stützfläche definierte Öffnung einen zwischen dem Paar mit Abstand angeordneter Rollenreihen befindlichen Raum umfaßt.

22. Auswurfmechanismus nach einem der vorstehend aufgeführten Ansprüche, bei dem das Mittel zum Drehen des Auswurfelements einen Elektromotor umfaßt.

23. Verfahren zum Auswerfen eines Gegenstands von einer Stützfläche durch Verwendung eines sich drehenden Auswurfelements (85, 120) nach einem der vorstehend aufgeführten Ansprüche, wobei die Verbesserung des Verfahrens die folgenden Schritte umfaßt:
Versehen des Auswurfelements mit einer länglich ausgeführten ersten Seite;
Drehen des Auswurfelements um eine feste Längsachse unterhalb der Stützfläche;
Drehen der länglich ausgeführten ersten Seite des Auswurfelements durch eine in der Stützfläche definierte Öffnung;
Kontaktherstellung des Gegenstands mit der länglich ausgeführten ersten Seite des Auswurfelements; und
Austragen des Gegenstands von der Stützfläche.

24. Verfahren nach Anspruch 23, bei dem der Schritt des Austragens des Gegenstands den folgenden Schritt umfaßt:
Abheben des Gegenstands von der Stützfläche;
Abkippen des Gegenstands von der Stützfläche; und
seitliches Überführen des Gegenstands von der Stützfläche zu einer gewünschten Austragsstelle.

25. Verfahren nach Anspruch 23 oder Anspruch 24, das weiterhin den folgenden Schritt umfaßt:
Transportieren des Gegenstands entlang der Stützfläche zu einer gewünschten Austragsstelle.

26. Verfahren nach Anspruch 25, das weiterhin den Schritt umfaßt,
dem Drehen des Gegenstands während des Schritts des Austragens des Gegenstands von der Stützfläche durch Verwendung eines Auswurfelements in der Form einer länglich ausgeführten, sich verjüngenden Austragstrommel entgegenzuwirken.

27. Verfahren nach einem der Ansprüche 23 bis 26, bei dem die Stützfläche ein Paar kontinuierlicher Fördervorrichtungen umfäßt.

## Revendications

1. Mécanisme comprenant un organe d'éjection pour éjecter un objet d'une surface support, le perfectionnement comprenant :
un organe d'éjection (85,120) de forme allongée et qui est monté de manière à tourner autour d'un axe longitudinal fixe sous-jacent à ladite surface support, **caractérisé en ce que** ledit organe d'éjection comporte un premier et un second côtés opposés (86a, 86b) allongés, ladite surface support définit une ouverture pour recevoir l'un desdits premier et second côtés opposés allongés ; et
des moyens (87) pour faire tourner ledit organe d'éjection autour dudit axe de telle façon que l'un desdits premier et second côtés opposés allongés tourne à travers ladite ouverture et au-dessus d'un plan défini par ladite surface support de façon à éjecter ledit objet de ladite surface support.

2. Mécanisme d'éjection selon la revendication 1, dans lequel ladite rotation de l'un desdits premier et second côtés opposés allongés définit un trajet courbe, ledit trajet courbe commençant en dessous dudit plan défini par ladite surface support, et ledit trajet courbe se terminant en dessous dudit plan défini par ladite surface support.

3. Mécanisme d'éjection selon la revendication 1 ou la revendication 2, dans lequel l'un dit desdits premier et second côtés allongés tourne à travers ladite ouverture et au-dessus dudit plan défini par ladite surface support, l'un dit desdits premier et second côtés allongés vient engager une surface inférieure dudit objet, ledit objet étant soulevé de ladite surface support, ledit objet étant basculé en dehors de ladite surface support, et ledit objet étant déchargé vers un emplacement de décharge désigné.

4. Mécanisme d'éjection selon l'une quelconque des revendications précédentes, dans lequel ledit premier et second côtés opposés allongés sont généralement de forme convexe.

5. Mécanisme d'éjection selon la revendication 4, dans lequel ledit premier et second côtés allongés généralement de forme convexe définissent une pluralité d'arêtes souples.

6. Mécanisme d'éjection selon la revendication 5, dans lequel ledit organe d'éjection a la forme d'un tambour asymétrique allongé monté sur un axe horizontal en dessous de ladite surface support.

7. Mécanisme d'éjection selon la revendication 6, dans lequel le tambour définit une section transversale trans-axiale généralement rectangulaire comportant des surfaces supérieure et inférieure et un premier et un second côtés opposés, lesdits premier et second côtés opposés étant adjacents auxdites surfaces supérieure et inférieure.

8. Mécanisme d'éjection selon la revendication 7, dans lequel ledit tambour comprend en outre une première et une seconde extrémités, lesdits premier et second côtés opposés étant interposés entre ladite première et seconde extrémités, et dans lequel lesdits premier et second côtés opposés se rétrécissent à partir de ladite seconde extrémité vers ladite première extrémité de telle façon que ledit tambour de décharge est plus large au niveau de ladite seconde extrémité qu'au niveau de ladite première extrémité.

9. Mécanisme d'éjection selon la revendication 8, dans lequel lesdits premier et second côtés vont en se rétrécissant depuis ladite seconde extrémité vers ladite première extrémité dans une direction opposée à la direction de déplacement de ladite paire de convoyeurs continus.

10. Mécanisme d'éjection selon la revendication 9, dans lequel chacun desdits premier et second côtés opposés définit des arêtes souples.

11. Mécanisme d'éjection selon la revendication 5,
dans lequel ledit organe d'éjection comporte une première est une secondé extrémités allongées, lesdits premier et second côtés allongés étant interposés entre lesdites première et seconde extrémités ; et
dans lequel chacun desdits premier et second côtés allongés va en se rétrécissant depuis ladite seconde extrémité vers ladite première extrémité, de telle sorte que la largeur dudit organe d'éjection est supérieure au niveau de ladite seconde extrémité qu'au niveau de ladite première extrémité.

12. Mécanisme d'éjection selon l'une quelconque des revendications précédentes, dans lequel ladite surface support comprend en outre :
une paire de convoyeurs continus (21) pour transporter ledit objet, ladite paire de convoyeurs continus étant disposés en parallèle, en étant écartés l'un de l'autre ; et
ledit mécanisme d'éjection étant disposé médialement par rapport à ladite paire de convoyeurs continus.

13. Mécanisme d'éjection selon la revendication 12, dans lequel ladite ouverture définie par ladite surface support comprend un espace interposé entre ladite paire de convoyeurs continus.

14. Mécanisme d'éjection selon la revendication 12 ou la revendication 13, comprenant en outre une pluralité de destinations de décharge disposées de manière adjacente à l'un desdits convoyeurs sur l'un ou l'autre de ses côtés.

15. Mécanisme d'éjection selon l'une quelconque des revendications 12 à 14, comprenant en outre un mécanisme pour entraîner ladite paire de convoyeurs continus, ledit mécanisme comprenant :
des moyens d'entraînement (87) configurés de manière à venir porter contre chacun de ladite paire de convoyeurs continus, lesdits moyens d'entraînement appliquant une force de rotation à ladite paire de convoyeurs continus ;
une paire de rouleaux de renvoi (44) pour maintenir l'engagement desdits moyens d'entraînement avec ladite paire de convoyeurs continus ; et
un mécanisme de mise sous tension (54) pour maintenir la tension désirée dans ladite paire de convoyeurs continus.

16. Mécanisme d'éjection selon la revendication 15, dans lequel ledit mécanisme de mise sous tension comprend :
un ressort (55) pour appliquer lesdits moyens d'entraînement en engagement avec ladite paire de convoyeurs continus.

17. Mécanisme d'éjection selon la revendication 16, dans lequel ledit mécanisme de mise sous tension comprend en outre :
un organe (52) de retenue du ressort interposé entre ledit ressort et lesdits moyens d'entraînement ; et
un moyen (57) pour comprimer et détendre ledit ressort contre ledit organe de retenue du ressort.

18. Mécanisme d'éjection selon la revendication 17, dans lequel ledit moyen pour comprimer et détendre ledit ressort comprend un vérin hydraulique.

19. Mécanisme d'éjection selon l'une quelconque des revendications 15 à 18, dans lequel lesdits moyens d'entraînement comprennent un moteur à engrenage (38) configuré de manière à venir porter contre une surface dentée de chacun de ladite paire de convoyeurs continus.

20. Mécanisme d'éjection selon l'une quelconque des revendications 1 à 11, dans lequel ladite surface support comprend en outre :
un convoyeur à banc de rouleaux pour transporter ledit objet, ledit convoyeur à banc de rouleaux définissant une paire de rangées espacées de rouleaux, lesdits rouleaux définissant des axes de rotation, lesdits axes de rotation étant dirigés transversalement par rapport audit axe de rotation dudit organe d'éjection, et
ledit mécanisme d'éjection étant disposé médialement par rapport à ladite paire des rangées espacées de rouleaux.

21. Mécanisme d'éjection selon la revendication 20, dans lequel ladite ouverture définie par ladite surface support comprend un espace interposé entre ladite paire des rangées espacées de rouleaux.

22. Mécanisme d'éjection selon l'une quelconque des revendications précédentes, dans lequel les moyens pour faire tourner ledit organe d'éjection comprennent un moteur électrique.

23. Procédé pour éjecter un objet d'une surface support en utilisant un organe d'éjection rotatif (85,12), selon l'une quelconque des revendications précédentes, le perfectionnement audit procédé comprenant les étapes consistant à :
prévoir l'organe d'éjection avec un premier côté allongé ;
faire tourner l'organe d'éjection autour d'un axe longitudinal fixe en dessous de ladite surface support ;
faire tourner le premier côté allongé dudit organe d'éjection à travers une ouverture définie dans ladite surface support ;
mettre en contact ledit objet avec ledit premier côté allongé dudit organe d'éjection ; et
décharger ledit objet de ladite surface support.

24. Procédé selon la revendication 23, dans lequel ladite étape consistant à décharger ledit objet comprend l'étape consistant à :
soulever ledit objet à partir de ladite surface support ;
faire basculer ledit objet en dehors de ladite surface support ; et
entraîner en translation ledit objet latéralement en dehors de ladite surface support vers une destination de décharge désirée.

25. Procédé selon la revendication 23 ou la revendication 24, comprenant en outre l'étape consistant à :
convoyer ledit objet le long de ladite surface support jusqu'à une destination de décharge désirée.

26. Procédé selon la revendication 25, comprenant en outre l'étape consistant à :
contrecarrer la rotation dudit objet lors de l'étape de décharge dudit objet à partir de ladite surface support en utilisant un organe d'éjection présentant la forme d'un tambour de décharge allongé allant en se rétrécissant.

27. Procédé selon l'une quelconque des revendications 23 à 26, dans lequel ladite surface support comprend une paire de convoyeurs continus.
